# EUROPÄISCHE PATENTSCHRIFT

(11) **EP 3 678 967 B1**
(45) Veröffentlichungstag und Bekanntmachung des Hinweises auf die Patenterteilung: **29.06.2022**
(21) Anmeldenummer: 18759614.3
(22) Anmeldetag: 23.08.2018
(51) Int. Cl.: B65G 47/86, B67C 7/00

(54) **BEHÄLTERBEHANDLUNGSANLAGE UND VERFAHREN ZUM HERSTELLEN ZWEIER GETRENNTER BEREICHE IN EINER SOLCHEN ANLAGE**
CONTAINER-PROCESSING SYSTEM AND METHOD FOR PRODUCING TWO SEPARATED REGIONS IN SUCH A SYSTEM
INSTALLATION DE MANIPULATION DE CONTENANTS ET PROCÉDÉ DE CRÉATION DE DEUX ZONES SÉPARÉES DANS UNE TELLE INSTALLATION

(30) Priorität: 08.09.2017 DE 102017215860
(43) Veröffentlichungstag der Anmeldung: 15.07.2020
(73) Patentinhaber: KRONES Aktiengesellschaft, 93073 Neutraubling (DE)
(72) Erfinder: HOLZER, Christian, 93073 Neutraubling (DE); SENN, Konrad, 93073 Neutraubling (DE); WINZINGER, Frank, 93073 Neutraubling (DE); ATTENBERGER, Tobias, 93073 Neutraubling (DE); SCHROLL, Bernd, 93073 Neutraubling (DE)
(74) Vertreter: Benninger, Johannes
(86) Internationale Anmeldenummer: PCT/EP2018/072813
(87) Internationale Veröffentlichungsnummer: WO 2019/048249

(56) Entgegenhaltungen:
- EP-A2- 2 361 874
- WO-A1-2010/081759
- WO-A1-2017/126483
- DE-A1-102011 122 853
- DE-C1- 19 817 735
- JP-A- 2003 237 936

## Beschreibung

Die vorliegende Erfindung betrifft eine Behälterbehandlungsanlage mit mindestens zwei in jeweils unterschiedlichen Anlagenbereichen umlaufenden Fördereinrichtungen mit den Merkmalen des unabhängigen Anspruches 1. Zudem betrifft die Erfindung ein Verfahren zum Herstellen zweier getrennter Bereiche in einer solchen Behälterbehandlungsanlage mit den Merkmalen des unabhängigen Verfahrensanspruchs.

Bekannte Behälterformungs- und Behälterbehandlungsanlagen umfassen in der Regel mehrere miteinander gekoppelte Stationen, die mittels geeigneter Transportsysteme miteinander gekoppelt sind, so dass die Behälter oder die zu Behältern zu verarbeitenden oder umzuformenden Vorformlinge einen definierten Transportweg durchlaufen können. Als platzsparende und mit sehr hoher Verarbeitungsgeschwindigkeit zuverlässig betreibbare Transportsysteme haben sich in vielen Fällen sog.

Transportsterne oder Übergabesterne durchgesetzt, die mit hoher Geschwindigkeit um vertikale Achsen rotieren und die an ihrem Außenumfang jeweils mit einer Vielzahl von Behältergreifern wie Klammern o. dgl. ausgestattet sind, die wechselweise ineinander greifen, um die Behälter von einem Transport- oder Übergabestern zum nächsten zu übergeben. Einem Zuführbereich für sog. Vorformlinge aus thermoplastischem Kunststoff folgt meist ein sog. Heizmodul, mit dessen Hilfe die Vorformlinge auf eine Umformtemperatur gebracht werden, um sie in einer nachfolgenden Station einem Blasform- oder Streckblasformprozess unterziehen zu können. Hierbei werden die Vorformlinge zu Kunststoffbehältern gewünschter Größe und Kontur umgeformt, um sie in einem nachfolgenden Prozess mit einer gewünschten Flüssigkeit befüllen zu können, bspw. mit einem Kaltgetränk. An ein solches Füllmodul können sich eine Station zum Verschließen der Behälter sowie eine Etikettierstation, eine Druckstation o. dgl. anschließen.

Der Fülltransferbereich muss regelmäßig gereinigt werden, zumindest jedoch nach einem Produktwechsel, d.h. nach einem Wechsel der in die Behälter zu füllenden Flüssigkeiten oder pastösen Stoffe. Da es bei diesen Reinigungsprozessen des Fülltransferbereichs fast unvermeidlich immer wieder zu Verschleppungen von Reinigungsmittel zur Blasmaschine kommt, können dort Probleme entstehen. Da die Aggregate sowie die Einzelteile der Blasmaschine nicht dafür ausgelegt sind, mit vergleichsweise aggressiven Reinigungsmitteln beaufschlagt zu werden, können an diesen Bauteilen Korrosionsschäden auftreten. Soll dies vermieden werden, müssen Vorkehrungen getroffen werden, bspw. durch Einbau relativ aufwändiger Absaugeinrichtungen.

Die DE 10 2006 053 193 A1 offenbart eine Vorrichtung und ein Verfahren zur Herstellung unterschiedlicher Kunststoffbehälter. Verschiedene Stationen zur Behälterbehandlung können bei dieser bekannten Vorrichtung in gegenüber der Maschinenumgebung abgeschlossenen Räumen angeordnet sein. Ebenso möglich ist es jedoch auch, dass die gesamte Behälterbehandlungsstation als Reinraum ausgebildet ist.

Eine Flaschenbehandlungsanlage mit mehreren Behandlungseinheiten, die kinematisch starr miteinander gekoppelt sind, ist weiterhin aus der DE 10 2006 059 001 A1 bekannt. Einzelne Behandlungseinheiten sollen mit unterschiedlichen Verarbeitungsgeschwindigkeiten betrieben werden können, ohne dass dies zwingend die Verarbeitungsgeschwindigkeiten der übrigen Stationen beeinflusst.

Aus der WO 2010 081 759 A1 ist eine Behälterbehandlungsanlage mit mehreren Stationen wie einer Blasstation, einer Heizstation und einem Füller bekannt, wobei die Stationen mit jeweils dazwischen angeordneten rotierenden, ineinander greifenden und Behälter transportierenden Übergabesternen gekoppelt sind. Einzelne Übergabesterne können zwischen einer Transfer- oder Arbeitsposition und einer zurückgezogenen Position bewegt bzw. verschoben werden. In der zurückgezogenen Position der Übergabesterne oder einzelner dieser Übergabesterne kann die Anlage dekontaminiert werden.

Eine Behälterbehandlungsanlage mit mehreren miteinander gekoppelten einzelnen Stationen, die voneinander abschirmbar sind, um etwa bei Reinigungsarbeiten einzelner Stationen die Verschleppung von Reinigungsmitteln oder Verunreinigungen benachbarter Stationen verhindern zu können, ist aus der EP 2 361 874 A2 bekannt. Diese bekannte Behälterbehandlungsanlage weist eine verstellbare Schottwand zwischen zwei benachbarten Stationen sowie eine in horizontaler und/oder in vertikaler Richtung verschiebbare Halte- bzw. Übergabeeinrichtung - gebildet bspw. durch einen rotierenden Transport- oder Übergabestern für Behälter - auf, wobei dieser verstellbare oder verschiebbare Transport- oder Übergabestern mit der verstellbaren Schottwand gekoppelt ist. Sobald die Schottwand zur Abtrennung benachbarter Stationen geschlossen bzw. abgesenkt wird, muss auch wenigstens einer der Transport- oder Übergabesterne aus seiner regulären Arbeitsposition verschoben werden, um nicht mit der Schottwand zu kollidieren.

Um diese relativ aufwendigen und zeitraubenden Verschiebebewegungen der Transport- oder Übergaberäder zu vermeiden, wird in der EP 2 139 665 B1 ein Schwenkmechanismus für die am Außenumfang solcher Transport- oder Übergaberäder angeordnete Tragelemente bzw. Behältergreifer vorgeschlagen. Das rotierende Übergaberad ist mit einer Kurvensteuerung ausgestattet, wobei entlang dieser Kurvensteuerung Kurvenrollen geführt werden, wodurch die Tragelemente bzw. Behältergreifer jeweils positioniert werden. Darüber hinaus gibt es ein schaltbares Kurvensegment, mit dessen Hilfe durch entsprechendes Abfahren mit den Kurvenrollen die Tragelemente durch Verschwenken und seitliches Anlegen an den Außenumfang des Übergaberades aus einem potentiellen Kollisionsbereich ferngehalten werden sollen. WO 2017/126483 A1 offenbart eine Anlage nach dem Oberbegriff des Anspruchs 1, sowie ein Verfahren nach dem Oberbegriff des Anspruchs 11.

Ein erstes Ziel der vorliegenden Erfindung besteht darin, eine Behälterbehandlungsanlage mit mehreren miteinander gekoppelten Stationen zur Verfügung zu stellen, bei der einzelne Stationen voneinander abschirmbar ausgebildet sind. Die Abschirmung oder - in anderen Worten ausgedrückt - die Abschottung einzelner Stationen soll in konstruktiver Hinsicht vereinfacht und gegenüber den aus dem Stand der Technik bekannten Mechanismen mit weniger mechanischem Verstellaufwand realisierbar sein, ohne dass hierbei der Grad der Abschottung wesentlich reduziert oder die Güte der Abschottung übermäßig beeinträchtigt werden.

Dieses erste Ziel der Erfindung wird mit dem Gegenstand des unabhängigen Anspruchs 1 durch die dort definierte Behälterbehandlungsanlage erreicht. Merkmale vorteilhafter Weiterbildungen der Erfindung ergeben sich aus den jeweiligen abhängigen Ansprüchen.

Zur Erreichung des genannten Ziels schlägt die vorliegende Erfindung eine Behälterbehandlungsanlage mit mindestens zwei in jeweils unterschiedlichen, aber benachbarten Anlagenbereichen umlaufenden Fördereinrichtungen vor, die jeweils eine Vielzahl von Behältergreifern, also bspw. Klammern, Dorne oder Schieber sowie die nachfolgend genannten Merkmale und Eigenschaften aufweisen.

Dabei kann es sich um steuerbare Behältergreifer oder aber auch um nicht separat oder individuell steuerbare Behältergreifer handeln. Bspw. kann vorgesehen sein, dass lediglich jede zweite Fördereinrichtung steuerbare Behältergreifer aufweist, während die andere Fördereinrichtung oder die mindestens eine weitere Fördereinrichtung mit nicht steuerbaren Behältergreifern ausgestattet ist. Eine Fördereinrichtung mit nicht steuerbaren Behältergreifern wird bspw. durch einen sog. Sägezahn-Transportstern gebildet. Hierbei werden die Behälter lediglich entlang von stationären Führungen verschoben und/oder gehalten.

Unter dem Begriff "steuerbar" bzw. unter steuerbaren Behältergreifern sind solche Ausführungsformen zu verstehen, bei denen die Behältergreifer zumindest geringfügig, relativ zu ihrer Fördereinrichtung, zur Aufnahme und Abgabe von Behältern bewegbar sind. Die Bewegung kann entweder über eine Nocken- oder Kurvensteuerung, über eigene Motoren bzw. Antriebe oder passiv initiiert werden. Unter einem passiven Antrieb bzw. einer passiven Greiferklammer wird dabei bspw. verstanden, dass die Öffnungsbewegung der Greiferklammer gegen die Kraft einer an der Greiferklammer angeordneten Feder zum Zuhalten der Klammerarme der Greiferklammer durch das Hineindrücken eines Behälters in die Greiferklammer verursacht wird. Hierbei wird das Öffnen der Klammerarme durch Kontakt der Klammerarme mit den Behälteraußenwänden verursacht.

Die umlaufenden Fördereinrichtungen können insbesondere durch rotierende Übergabesterne oder insbesondere durch Transfersterne gebildet sein, die an ihrem jeweiligen Außenumfang eine Vielzahl der genannten Behältergreifer, Klammern, Dorne, Schieber etc. aufweisen. Die Behältergreifer o.ä. sind dabei insbesondere in äquidistanten Abständen an der jeweiligen Fördereinrichtung angeordnet. Die umlaufenden Fördereinrichtungen bzw. rotierenden Übergabe- oder Transfersterne definieren paarweise jeweils einen Übergabebereich, der von beiden benachbarten Fördereinrichtungen gemeinsam tangiert wird. Bei der erfindungsgemäßen Behälterbehandlungsanlage sind die erwähnten mindestens zwei benachbarten Anlagenbereiche jeweils durch einen Maschinenschutz begrenzt und separat voneinander zugänglich, bspw. für Wartungs-, Reinigungs- und/oder Reparaturarbeiten.

Die umlaufenden Fördereinrichtungen können insbesondere als sog. Neckhandlingförderer ausgebildet sein. Die an den Neckhandlingförderern angeordneten Behältergreifer erfassen und halten die Behälter im Bereich der jeweiligen Behältermündung bzw. Behälteröffnung. Die Behältermündung ist der Bereich eines Behälters, der einem Standboden des Behälters gegenüberliegt. An der Behältermündung befinden sich üblicherweise ein Tragring, ein Verschlussring, ein Gewinde und eine Ausgießöffnung. Der Tragring und/oder der Verschlussring sind insbesondere als eine sich nach außen erstreckende Wulst gegenüber dem Gewinde ausgebildet.

Bei einer hier beschriebenen Behälterbehandlungsanlage mit mindestens zwei in jeweils unterschiedlichen, aber benachbarten Anlagenbereichen umlaufenden Fördereinrichtungen ist ein direkter Durchgang von dem einen zum benachbarten Anlagenbereich nicht möglich. Insbesondere sind die beiden benachbarten Anlagenbereiche für einen Bediener oder für die Anlage betreibende und/oder wartende Personen nur separat voneinander zugänglich.

Weiterhin ist die erfindungsgemäße Behälterbehandlungsanlage dadurch charakterisiert, dass die mindestens zwei Anlagenbereiche durch ein bewegliches, einoder mehrteiliges Schottelement, welches in einen Transport- und/oder Übergabeweg der Behälter zwischen die mindestens zwei Fördereinrichtungen eingebracht oder von dort entfernt werden kann, zumindest teilweise voneinander abtrennbar sind. Hierbei ist vorgesehen, dass das bspw. durch eine ein- oder mehrteilige Schottwand gebildete Schottelement beim Abtrennen der in den jeweiligen Anlagenbereichen befindlichen mindestens zwei Fördereinrichtungen voneinander oder beim Freigeben des Transportund/oder Übergabeweges zwischen den Fördereinrichtungen einer im Wesentlichen senkrecht zur Transportebene oder Transportrichtung der Behälter orientierten Bewegungsrichtung folgt.

Für den Fachmann als Leser sei jedoch an dieser Stelle betont, dass die Bewegungsrichtung der beweglichen Schottwand keineswegs senkrecht oder annähernd senkrecht zur Transportebene oder Transportrichtung der Behälter orientiert sein muss, sondern dass sich je nach Einbausituation oder Maschinenkonfiguration auch andere sinnvolle Bewegungsrichtungen, bspw. leicht winkelig zur Transportrichtung der Behälter angestellte Bewegungsrichtungen ergeben können. Solche von einer senkrechten Bewegungsrichtung abweichende Winkelstellungen der Verstellrichtung der Schottwand oder des Schottelementes sollen hier als gleichwertige Abwandlungen gelten und gleichermaßen vom Schutzbereich der Ansprüche abgedeckt sein.

Außerdem ist vorgesehen, dass das Schottelement beim Abtrennen der in den jeweiligen Anlagenbereichen befindlichen mindestens zwei Fördereinrichtungen voneinander die insbesondere steuerbaren Behältergreifer zumindest einer der beiden Fördereinrichtungen im Übergabebereich weitgehend gegenüber demjenigen Anlagenbereich abschirmt, in dem sich die jeweils andere Fördereinrichtung befindet.

Das neuartige Schottelement liefert für die erfindungsgemäße Behälterbehandlungsanlage den besonderen Vorteil, dass auf jegliche Verstell- und/oder Verschiebemechanismen für die Wellen der umlaufenden bzw. rotierenden Fördereinrichtungen verzichtet werden kann, die bei den aus dem Stand der Technik bekannten Anlagen für einen erheblichen konstruktiven Aufwand sorgen.

Die rotierenden Sterne können nunmehr auch bei allfälligen Wartungs- oder Reparaturmaßnahmen bzw. bei Reinigungsdurchläufen an Ort und Stelle verbleiben und müssen nicht mitsamt ihren Antrieben und Lagerungen verschoben werden, was nicht nur Kostenvorteile mit sich bringt, sondern auch die für die Verstellung der Transfer- oder Übergabesterne notwendigen Umstellzeiten erheblich verkürzen bzw. komplett einsparen kann.

Da das Schottelement demgegenüber in sehr kurzer Zeit durch vertikales (oder, wie oben erwähnt, schräges) Verschieben oder durch gegensinnige Zustellbewegungen geschlossen und an die Fördereinrichtungen angenähert werden kann, vereinfacht sich die Herstellung des Wartungs-, Reparatur- oder Reinigungsmodus erheblich.

Gemäß einer Ausführungsform der Erfindung umfassen die Fördereinrichtungen vertikale oder annähernd Drehachsen, um welche sich die Behältergreifer im Betriebsmodus oder im Produktionsmodus drehen. Die Drehachsen sind vorzugsweise parallel und in einem festen Abstand zu einer Trennwand des Maschinenschutzes angeordnet. Vorzugsweise ist vorgesehen, dass die Behältergreifer an jeder bestimmten Umfangsposition relativ zur Drehachse der Fördereinrichtung immer denselben Abstand zu der Drehachse der Fördereinrichtung aufweisen. Dies gilt insbesondere bei Fördereinrichtungen mit einer kreisrunden Umlaufbahn der Behältergreifer. Dies gilt aber auch für andere Fördereinrichtungen, bspw. für Fördereinrichtungen mit einer ovalen Umlaufbahn o.ä. Auch hier gibt es in jeder beliebigen, definierten Umfangsposition relativ zu einem Maschinenschutz nur einen möglichen Abstand der Behältergreifer zur Drehachse der Fördereinrichtung. Dieser Abstand ist für alle Behältergreifer in dieser jeweiligen Umfangsposition gleich. Es ist insbesondere keine zusätzliche Kurve oder kein zusätzlicher Antrieb vorgesehen, um die Behältergreifer im Übergabebereich zwischen den beiden Anlagebereichen relativ zur Fördereinrichtung von dem Maschinenschutz zu beabstanden. D.h., der Abstand der Behältergreifer einer ersten Fördereinrichtung des ersten Anlagenbereiches ist an jeder Umfangsposition relativ zur Drehachse der zweiten Fördereinrichtung des zweiten Anlagenbereiches definiert. Dieser jeweilige Abstand ist sowohl im Betriebsmodus bzw. Produktionsmodus als auch im Formatwechsel-, Reparatur-, Einrichtungs-, Reinigungs- und/oder Wartungsmodus immer gleich und wird nicht verändert.

Erfindungsgemäß ist das Schottelement durch wenigstens zwei separate und unabhängig voneinander in ungefähr vertikaler Richtung verschiebbare Schottwandabschnitte bzw. Schottwandteile gebildet die jeweils in einer im Wesentlichen senkrecht zur Transportebene oder -richtung orientierten Verschieberichtung von oben und unten in die Transportebene bewegbar sind, d.h., die Schottwandabschnitte bzw. Schottwandteile können insbesondere vertikal nach oben oder unten verschoben werden. Unter einer Bewegung in vertikaler Richtung ist insbesondere eine Bewegung lotrecht (senkrecht), d.h., rechtwinklig zur Erdoberfläche bzw. auf den Erdmittelpunkt gerichtet oder entgegengesetzt dazu zu verstehen. Wie oben erwähnt, können sich jedoch auch sinnvolle andere Bewegungsrichtungen ergeben, die in einem kleinen Winkel zur Vertikalen stehen können, ohne dass damit der Erfindungsgedanke in irgendeiner Weise beeinträchtigt oder verändert wäre.

Ein solches zwei- oder mehrteiliges Schott oder Schottelement, das durch zwei oder mehr gegeneinander verstellbare Schottwandabschnitte gebildet ist, und das senkrecht zur Transportebene oder -richtung von oben und unten in die Transportebene zugefahren werden kann, ermöglicht es problemlos, in sehr kurzer Zeit den gewünschten Wartungs-, Reparatur- oder Reinigungsmodus herzustellen. Damit können die Fördereinrichtungen, die bspw. durch rotierende Übergabe- oder Transfersterne für die Behälter gebildet sein können, an Ort und Stelle in der Nähe der mittels des jeweiligen Schottelements ausgebildeten Schleuse belassen werden, und das Schleusentor bzw. die Schottwand kann in einer Weise gestaltet sein, dass es bspw. an die Konturen der Behältergreifer, Klammerarme bzw. des Sterns angepasst ist und dort unter Ausbildung eines sehr kleinen Spaltes weitgehend abdichtet bzw. abschotten kann.

Diese Schottwandelemente bzw. Schottwandteile können in entsprechender Konturanpassung von oben und von unten an den jeweiligen Transfer- bzw. Übergabestern herangefahren werden, so dass der Übergabebereich, in dem sich die Behältergreifer zweier benachbarter umlaufender Fördereinrichtungen oder zweier benachbarter Transfer- oder Übergabesterne in ihrem Umlaufweg überschneiden, weitgehend abgedichtet und gegen Eingriffe von außen durch Herstellung sehr kleiner Spaltmaße weitgehend geschützt ist.

Vorzugsweise sind bei diesen Varianten der erfindungsgemäßen Behälterbehandlungsanlage die beiden Schottwandabschnitte unabhängig voneinander bewegbar und/oder antreibbar, bspw. durch pneumatisch oder hydraulisch betätigte Stellzylinder oder durch elektrisch antreibbare Linearmotoren o. dgl.

Dies gilt auch für Varianten, bei denen das Schottelement durch mehr als zwei Schottwandabschnitte gebildet ist, so dass auch diese jeweils unabhängig voneinander angetrieben werden können. So kann bspw. eine Variante der erfindungsgemäßen Behälterbehandlungsanlage vorsehen, dass das Schottelement mindestens vierteilig ist, wobei zwei Teile von unten nach oben und zwei Teile von oben nach unten in die Transportebene zugestellt werden können, und wobei jeweils ein von oben nach unten und ein von unten nach oben bewegbares Teil auf einer Seite einer das Schott umgebenden Trennwand des Maschinenschutzes angeordnet ist.

Vorzugsweise kann bei einer weiteren Ausführungsvariante auch vorgesehen sein, dass sich der Bereich, innerhalb dessen sich das mindestens eine bewegbare Schottelement befindet, zwischen den Schwerpunkten und/oder zwischen den Drehachsen der Fördereinrichtungen der benachbarten Anlagenbereiche befindet. Insbesondere zwischen den Schwerpunkten und/oder zwischen den Drehachsen der Fördereinrichtungen der benachbarten Anlagenbereiche, die den Übergabebereich für die Behälter von dem einen Anlagenbereich zum anderen Anlagenbereich darstellen. Sind die Fördereinrichtungen bspw. als Transportsterne ausgebildet, dann befindet sich der Bereich insbesondere zwischen den Drehachsen der Transportsterne. Definiert man eine Haupttransportrichtung der Behälter von dem einen ersten Anlagenbereich zu dem nachfolgenden zweiten Anlagenbereich, so ist die Haupttransportrichtung zwischen der Drehachse der ersten Fördereinrichtung des ersten Anlagebereichs und der Drehachse der zweiten Fördereinrichtung des zweiten Anlagebereichs ausgebildet. Die Haupttransportrichtung stellt im Wesentlichen die Normale auf eine Ebene der Trennwand zwischen den beiden Anlagenbereichen dar. Insbesondere bilde die Haupttransportrichtung eine Normale zu dem Bereich, innerhalb dessen sich das mindestens eine bewegbare Schottelement befindet.

Die Behältergreifer, die bspw. durch Klammern oder Klammergreifer o. dgl. gebildet sein können, bleiben vorzugsweise bei in die Transportebene oder -richtung bewegtem ein- oder mehrteiligem Schottelement jeweils im Übergabebereich und sind dort vorzugsweise berührungslos zumindest teilweise vom Schottelement abgedeckt. Es ist somit keinerlei Verstellung der Behältergreifer erforderlich, bspw. ein Verschwenken oder tangentiales Anlegen an den Außenumfang des jeweiligen Transfer- oder Übergabesterns, da die Konturen der jeweiligen Schottwandabschnitte an die Konturen der typischerweise in radialer Richtung am Außenumfang der Sterne herausragenden Behältergreifer angepasst ist.

Ggf. kann es sinnvoll sein, dass in dem eingestellten Wartungs-, Reparatur- oder Reinigungs- oder Spülmodus der Behälterbehandlungsanlage bzw. des entsprechenden Anlagenbereichs zu gewährleisten ist, dass der rotierende Transfer- oder Übergabestern in seinem Übergabebereich, der in die Schleuse hineinragt, in einer bestimmten Umfangsposition angehalten wird, damit die Konturen von Stern bzw. der daran befindlichen Behältergreifer und dem Schottelement zusammenpassen. Die umlaufende Fördereinrichtung bzw. der rotierende Transfer- oder Übergabestern weist hierfür im Wesentlichen keine Hinterschnitte auf, so dass die Schleuse bzw. das Schottelement maximal zweiteilig ausgestaltet werden kann.

Vorzugsweise wird mittels des definierten Schottelements nicht an einem ggf. vorhandenen Teilungsverzugstern, sondern ausschließlich an einem Transfer- oder Übergabestern ohne Teilungsverzug, insbesondere im Füllerbereich, abgedichtet, da diese Sterne generell weniger Hinterschnitte aufweisen. Sofern eine ggf. geringfügige Verdrehung des Sterns bzw. der umlaufenden Fördereinrichtung zum Anfahren einer definierten Position notwendig ist, muss allenfalls der hierfür einzuplanende erhöhte Programmieraufwand zur Realisierung einer automatischen Konturanpassung berücksichtigt werden.

Unter Wartungsarbeiten sind im Zusammenhang mit der vorliegenden Erfindung auch im Rahmen eines Produktwechsels notwendige Umbauarbeiten an der Behälterbehandlungsanlage zu verstehen. So ist bspw. notwendig, Formatteile in den einzelnen Anlagenbereichen zur Anpassung an das neue Produkt auszutauschen, bspw. an den Fördereinrichtungen oder an anderen Anlagenkomponenten. Dies betrifft bspw. die Blasformen, Behältergreifer, Füllstutzen etc.

Unter einem Teilungsverzugsstern wird ein Transportstern verstanden, an welchem der relative Abstand benachbarter Behältergreifer entlang des Umfangs bzw. entlang der Umlaufbahn verändert werden kann. Insbesondere entspricht ein erster Abstand zwischen den dem Teilungsverzugsstern zugeführten Behältern nicht einem zweiten Abstand zwischen den Behältern die von dem Teilungsverzugsstern an einen nachfolgenden Anlagenbereich übergeben werden. Ein Teilungsverzugsstern kann bspw. dafür eingesetzt werden, um die Behälter aus den Blasformen einer Blasmaschine zu entnehmen und einem Füller oder einem Etikettierer zuzuführen.

Die erfindungsgemäße Behälterbehandlungsanlage hat den besonderen Vorteil, dass mit den beschriebenen konstruktiven Maßnahmen sehr geringe Spaltmaße erreicht werden können. So können bei geschlossenem Schottelement die Spaltmaße so klein sein, dass ein Hindurchgreifen von einer Person nicht möglich ist. Ein vorgeschriebener Abstand des Spaltes von allen beweglichen Teilen von mindestens zwanzig Millimetern bei einem realisierten Spaltmaß von maximal acht Millimetern kann solchermaßen problemlos erreicht werden.

Zudem kann das Schottelement so breit ausgeführt sein, dass bei geschlossenem Schottelement bzw. bei geschlossenen Schottwandabschnitten keine beweglichen Teile auf der jeweilig anderen Seite zu erreichen sind. Diese Vorgaben können bei der erfindungsgemäßen Behälterbehandlungsanlage dadurch erreicht werden, dass die jeweils innerhalb des Übergabebereichs befindlichen Behältergreifer (z.B. Klammern) zumindest eines von wenigstens zwei benachbarten umlaufenden Fördereinrichtungen bei in die Transportebene oder -richtung bewegtem ein- oder mehrteiligem Schottelement annähernd vollständig abgedeckt sind, wodurch der Übergabebereich annähernd komplett abgeschottet ist. Vorzugsweise kann dies dadurch erreicht werden, dass die Kontur der Sterne und die Kontur des Schotts so aufeinander angepasst sind, dass ein gleichmäßig kleiner Spalt erzeugt werden kann.

Gemäß einer Ausführungsform ist ein Schottelement in einem Schnitt entlang einer vertikalen Ebene parallel zur Haupttransportrichtung im Wesentlichen L-förmig ausgebildet. Dabei ist der lange Schenkel des "L" parallel und mit kurzem Abstand zum Maschinenschutz bzw. zur Trennwand angeordnet.

Insbesondere kann der lange Schenkel des "L" in einem Abstand von bis zu 30 Millimetern oder weniger zum Maschinenschutz bzw. zur Trennwand angeordnet sein. Besonders sinnvoll ist es, den langen Schenkel des "L" in einem Abstand von etwa 15 Millimetern oder weniger zum Maschinenschutz bzw. zur Trennwand anzuordnen.

Weiterhin ist der kurze Schenkel des "L" sinnvollerweise parallel zur Transportebene und mit kurzem Abstand zu den Behältergreifern oder Fördereinrichtungen angeordnet.

Insbesondere kann der kurze Schenkel des oben erwähnten "L" in einem Abstand von ca. 60 Millimetern oder weniger, bevorzugt jedoch in einem Abstand von etwa 20 Millimetern oder weniger zu den Behältergreifern oder Fördereinrichtungen angeordnet. Dies trifft vorzugsweise auf alle Schottelemente der Behälterbehandlungsanlage zu. Dabei ist grundsätzlich auch nicht ausgeschlossen, dass der kurze Schenkel des "L" länger ist als der lange Schenkel.

Gemäß einer Ausführungsform erstreckt sich ein Bereich senkrecht zu der oben genannten Schnittebene und in welchem der kurze Schenkel des L-förmigen Schottelements eine Fördereinrichtung abdeckt, über mindestens ein Viertel einer Fördereinrichtung, wobei sich der Schenkel des Schottelements bevorzugt über etwa ein Drittel des Durchmessers der Fördereinrichtung erstrecken kann.

Eine weitere Variante der erfindungsgemäßen Behälterbehandlungsanlage kann in einer Weise ausgestaltet sein, dass die jeweils innerhalb des Übergabebereichs befindlichen Behältergreifer (z.B. Klammern) von wenigstens zwei benachbarten umlaufenden Fördereinrichtungen bei in die Transportebene oder -richtung bewegtem einoder mehrteiligem Schottelement annähernd vollständig abgedeckt sind. Hierbei kann die erreichbare Abschottung in beide Richtungen wirken (Beidseitigkeit), bzw. die Abschottung kann oberhalb und unterhalb eines rotierenden Transfern- oder Übergabesterns in dessen jeweiligem Übergabebereich wirksam sein.

Die optional verwendbaren zweiteiligen Schottelemente können bspw. mit in vertikaler Richtung gegeneinander zustellbaren oberen und unteren Schottwandabschnitten ausgestattet sein. Diese Schottwandabschnitte können zudem bspw. jeweils an ihren zueinander weisenden und zum Luftspalt weisenden oberen bzw. unteren Kanten mit horizontalen Abschirmblechen ausgestattet sein, welche die Behältergreifer, die durch Klammern oder Klammergreifer o. dgl. gebildet sein können, innerhalb des gesamten Übergabebereiches weitgehend nach oben und unten abdecken und abschirmen. Zu diesem Zweck sind diese Abschirmbleche vorzugsweise mit einer zur jeweiligen rotierenden Scheibe des abzuschirmenden Einlauf- oder Auslaufsterns weisenden konkaven Kantenkontur ausgestattet, wobei diese konkave Kante in ihrer Kontur und in ihrem Radius vorzugsweise exakt an den Radius und die Kontur der auf gleicher Höhe befindlichen Scheibe des jeweils abzuschirmenden Einlauf- oder Auslaufsterns angepasst ist, so dass dessen Außenumfang in geringem Abstand zur konkaven Kante umlaufen kann, während die jeweils im Übergabebereich befindlichen Behältergreifer des entsprechenden abzuschirmenden Einlauf- oder Auslaufsterns durch die oberhalb und unterhalb der Behältergreifer und in geringem Abstand zu diesen befindlichen Abschirmbleche abgedeckt sind. Bei der Ausbildung eines Schottelements in oben beschriebener L- Form werden die Abschirmbleche insbesondere durch die kurzen Schenkel des "L" gebildet.

Gemäß einer Ausführungsform ist vorgesehen, dass ein Bereich eines Schottelements, welcher sich im Wesentlichen parallel zu der Transportebene der Behälter erstreckt, eine Kontur aufweist, die im Wesentlichen einer Kontur der von diesem Schottelement abgedeckten Fördereinrichtung entspricht. Insbesondere ist eine solche Kontur im Wesentlichen bogen- bzw. teilkreisförmig, wobei sich der Bogen bzw. Teilkreis im Wesentlichen parallel zu der Transportebene erstreckt und wobei die Kontur insbesondere konzentrisch zu einer Drehachse der von diesem Schottelement abgedeckten Fördereinrichtung ausgebildet ist. D.h., insbesondere kann die Außenkontur der Abschirmbleche im Wesentlichen konzentrisch zu der Außenkontur der dem Anlagenabschnitt zugeordneten Fördereinrichtung ausgebildet sein. Dies bezieht sich auf die Außenkontur des freien Endabschnitts des kurzen Schenkels des "L", der sich in Richtung der Fördereinrichtung hin erstreckt.

Wahlweise können die umlaufenden Fördereinrichtungen jeweils durch rotierende Fördersterne mit am Außenumfang jeweils verteilten Behältergreifern gebildet sein, die in jeder Lage des ein- oder mehrteiligen verschiebbaren Schottelementes weiterhin uneingeschränkt drehbar sind bzw. bleiben. Konkret kann vorgesehen sein, dass sich mindestens einer der beiden Sterne bei geschlossenem Schott drehen lässt und hierbei keine Berührung mit einem der Schottwandabschnitte bzw. mit dem Schottelement erfolgen kann.

Bei allen Varianten der erfindungsgemäßen Behälterbehandlungsanlage kann es von Vorteil sein, wenn die Behältergreifer (z.B. Klammern o.ä.) jedes der wenigstens zwei umlaufenden Fördereinrichtungen (z.B. rotierende Fördersterne) in jeder Lage des einoder mehrteiligen verschiebbaren Schottelementes weiterhin uneingeschränkt beweglich sind bzw. bleiben. Zudem weisen die erfindungsgemäß ausgestalteten Schottelemente den Vorteil auf, dass keinerlei Verstellung der Behältergreifer erforderlich ist, bspw. ein Verschwenken oder tangentiales Anlegen an den Außenumfang des jeweiligen Transferoder Übergabesterns, da die Konturen der jeweiligen Schottwandabschnitte mit ihren optional vorzusehenden jeweiligen oberen und/oder unteren Abschirmblechen an die Konturen der typischerweise in radialer Richtung am Außenumfang der Sterne herausragenden Behältergreifer angepasst sind. Die umlaufenden Fördereinrichtungen bzw. die rotierenden Transfer- oder Übergabesterne weisen zudem vorzugsweise keinerlei Hinterschnitte auf, so dass die Schleuse bzw. das Schottelement in jedem Anlagenbereich maximal zweiteilig ausgestaltet werden kann.

Bspw. kann vorgesehen sein, dass sich in einem Anlagenbereich eine Streckblasmaschine befindet, und dass sich im benachbarten Anlagenbereich eine Etikettiermaschine befindet. Zwischen der Streckblasmaschine und der Etikettiermaschine sind bevorzugt mindestens zwei und bevorzugt maximal fünf Transfersterne vorgesehen. Ein oben beschriebenes Schottelement ist zwischen zwei dieser, den Übergabebereich zwischen dem Streckblasmodul und dem Etikettiermodul bildenden Transfersterne angeordnet. Was unter "zwischen" zu verstehen ist, wurde im Zusammenhang der vorliegenden Erfindung ausführlich beschrieben und definiert. Insbesondere ist das mindestens eine Schottelement zwischen einem innerhalb eines Blasmoduls der Streckblasmaschine zugeordneten Transferstern und einem innerhalb eines Etikettiermoduls der Etikettiermaschine zugeordneten Transferstern angeordnet.

Die Behälterbehandlungsanlage kann auch zwei derartige Schottelemente aufweisen, wenn bspw. eine Blasmaschine, eine Etikettiermaschine und ein Füller miteinander, wieder jeweils über Transfersterne, verblockt sind. Der hier gebrauchte Begriff des Verblockens beschreibt insbesondere eine feste, insbesondere raumsparende Anordnung verschiedener Anlagenbereiche der Behälterbehandlungsanlage, die gegebenenfalls oder insbesondere durch eine einzige Steuerung der Behälterbehandlungsanlage ansteuerbar sind. In dem Fall einer Behälterbehandlungsanlage mit Blasmaschine, Etikettiermaschine und Füller ergeben es drei Anlagenbereiche, wobei jeweils zwei benachbarte Anlagenbereiche mit einem Schottelement voneinander getrennt werden.

Ein weiteres Ziel der Erfindung besteht darin, ein vereinfachtes Verfahren zur Abschottung einzelner Stationen einer Behälterbehandlungsanlage voneinander zur Verfügung zu stellen, bei dem der mechanische Verstellaufwand im Zusammenhang mit der Abschottung der Stationen voneinander oder der Öffnung dieser Abschottung gegenüber den bisher bekannten Verfahren reduziert ist, ohne dass hierbei der Grad der Abschottung im Wesentlichen reduziert oder die Güte der Abschottung beeinträchtigt werden.

Dieses weitere Ziel der Erfindung wird mit dem Gegenstand des unabhängigen Verfahrensanspruchs erreicht. Merkmale vorteilhafter Weiterbildungen der Erfindung ergeben sich aus den jeweiligen abhängigen Verfahrensansprüchen.

So schlägt die Erfindung zur Erreichung des weiteren genannten Ziels ein Verfahren zum Herstellen zweier getrennter Bereiche in einer Behälterbehandlungsanlage mit mindestens zwei in jeweils unterschiedlichen, aber benachbarten Anlagenbereichen umlaufenden Fördereinrichtungen vor, welche Fördereinrichtungen jeweils eine Vielzahl von, insbesondere steuerbaren, Behältergreifern, also bspw. Klammern, Dorne oder Schieber aufweisen können. Die umlaufenden Fördereinrichtungen, die insbesondere durch Transfer- oder Übergabesterne gebildet sein können, definieren paarweise jeweils einen Übergabebereich, der von beiden benachbarten Fördereinrichtungen bzw. Transferoder Übergabesternen gemeinsam tangiert wird. Weiterhin ist die Behälterbehandlungsanlage in einer Weise ausgestaltet, dass die mindestens zwei benachbarten Anlagenbereiche jeweils durch einen Maschinenschutz begrenzt und separat voneinander zugänglich sind.

Zudem werden die mindestens zwei Anlagenbereiche durch Aktivieren eines beweglichen, ein- oder mehrteiligen Schottelementes, welches in einen Transportund/oder Übergabeweg der Behälter zwischen die mindestens zwei Fördereinrichtungen eingebracht oder von dort entfernt wird, zumindest teilweise voneinander abgetrennt. Hierbei ist vorgesehen, dass das Schottelement, das bspw. durch eine ein- oder mehrteilige Schottwand gebildet sein kann, beim Abtrennen der in den jeweiligen Anlagenbereichen befindlichen mindestens zwei Fördereinrichtungen voneinander oder beim Freigeben des Transport- und/oder Übergabeweges zwischen den Fördereinrichtungen einer im Wesentlichen senkrecht zur Transportebene oder Transportrichtung der Behälter orientierten Bewegungsrichtung folgt. Darüber hinaus ist vorgesehen, dass das Schottelement beim Abtrennen der in den jeweiligen Anlagenbereichen befindlichen mindestens zwei Fördereinrichtungen voneinander die, insbesondere steuerbaren, Behältergreifer zumindest einer der beiden Fördereinrichtungen im Übergabebereich weitgehend gegenüber demjenigen Anlagenbereich abschirmt, in dem sich die jeweils andere Fördereinrichtung befindet.

Ein beispielhafter Verfahrensablauf kann folgendermaßen gestaltet sein: In einem Produktionsmodus erfolgt erst das Herstellen der Behälter durch die Blasmaschine, dann das Befüllen der Behälter durch den Füller und anschließendes das Aufbringen eines Etiketts. Innerhalb des Füllers erfolgt gegebenenfalls zeitgleich ein Verschließen der Behälter. Die derart vorbereiteten Behälter werden anschließend über eine weitere Fördereinrichtung ab und der weiteren Handhabung zugeführt; bspw. erfolgt anschließend eine Zusammenstellung der Behälter in Gruppen und/oder eine Verpackung der Behälter oder Behältergruppen etc.

Ein Formatwechsel-, Reparatur-, Einrichtungs-, Reinigungs- und/oder Wartungsmodus kann entweder automatisch bei einem Produktwechsel oder einer Störung oder aber durch einen Bediener der Behälterbehandlungsanlage eingeleitet werden. Nach dem Einleiten und oder während des Formatwechsel-, Reparatur-, Einrichtungs-, Reinigungs- und/oder Wartungsmodus können die Bewegungen der Fördereinrichtungen der Behälterbehandlungsanlage zumindest zeitweise angehalten werden.

Bei stehenden Fördereinrichtungen beider Anlagenbereiche erfolgt eine Verstellung des zwischen den zwei Fördereinrichtungen der beiden Anlagenbereiche befindlichen Schottelementes in eine Schließposition. Daran anschließend können die Formatwechsel-, Reparatur-, Einrichtungs-, Reinigungs- und/oder Wartungsarbeiten durchgeführt werden. Dies kann entweder manuell oder mittels eines Roboters oder automatisch erfolgen. Bspw. muss der Füller bei einem Produktwechsel gereinigt werden, dies geschieht bspw. durch Sprühen von Wasser oder Reinigungsmittel, die Blasformen der Blasmaschine müssen gegebenenfalls gewechselt werden und die Etiketten müssen ausgetauscht werden etc.

Nachdem die Formatwechsel-, Reparatur-, Einrichtungs-, Reinigungs- und/oder Wartungsarbeiten abgeschlossen sind, wird das Schottelement in eine Öffnungsposition gebracht und die Produktion kann wieder gestartet werden, insbesondere das Herstellen, Abfüllen und Etikettieren sowie Transportieren von Behältern in einem Produktionsmodus.

Insbesondere kann während des Formatwechsel-, Reparatur-, Einrichtungs-, Reinigungs- und/oder Wartungsmodus vorgesehen sein, dass Formatwechsel-, Reparatur-, Einrichtungs-, Reinigungs- und/oder Wartungsarbeiten in beiden zu dem Schottelement benachbarten Anlagenbereichen zeitgleich durch unterschiedliche Bediener und unabhängig voneinander durchgeführt werden.

Während eines Formatwechsel-, Reparatur-, Einrichtungs-, Reinigungs- und/oder Wartungsmodus ist von einer Steuerung, insbesondere der Steuerung der Behälterbehandlungsanlage, ein Tipp-Betrieb für zumindest eine an das Schottelement angrenzende Fördereinrichtung freigegeben, welche in dem Anlagenbereich angeordnet ist, in welchem sich ein Schalter für den Tipp- Betrieb der Fördereinrichtung befindet. Durch Tippen des Schalters kann eine Bewegung der Fördereinrichtung ausgelöst werden, insbesondere eine Bewegung entlang einer Bewegungsstrecke, die dem Teilungsabstand zwischen den Behältergreifern entspricht.

Ein Tipp- Betrieb der mindestens einen Fördereinrichtung im benachbarten Anlagenbereich ist hierbei vorzugsweise steuerungstechnisch unterbunden bzw. gar nicht vorgesehen. D.h. gemäß einer Ausführungsform kann vorgesehen sein, dass zumindest zu einem definierten Zeitpunkt nur an einer Fördereinrichtung der aneinandergrenzenden Anlagenbereiche ein solcher Tipp- Betrieb möglich ist.

Alternativ ist denkbar, dass an beiden Fördereinrichtungen ein solcher TippBetrieb insbesondere unabhängig voneinander möglich ist. D.h. ein erster Bediener kann die erste Fördereinrichtung im ersten Anlagenbereich über Tippbetrieb ansteuern, um bspw. die Blasformen der Blasmaschine auszutauschen. Weiterhin kann davon unabhängig ein zweiter Bediener die zweite Fördereinrichtung im zweiten Anlagenbereich über Tippbetrieb ansteuern, um bspw. die Füllventile des Füllers auszutauschen. Alternativ könnte sich bspw. eine Fördereinrichtung für einen Reinigungsmodus kontinuierlich drehen.

Bei der Bewegung der freigegebenen Fördereinrichtung können in demselben Anlagenbereich noch weitere Fördereinrichtungen oder Behandlungskarusselle wie bspw. das Blasrad o.ä. gedreht werden, weil diese bspw. mechanisch mit der Fördereinrichtung gekoppelt sind oder mit stationären Düsen gereinigt werden müssen. Erfindungsgemäß sieht das Verfahren vor, dass das Schottelement durch wenigstens zwei separate und unabhängig voneinander in ungefähr vertikaler Richtung verschiebbare Schottwandabschnitte gebildet wird, die jeweils in einer im Wesentlichen senkrecht zur Transportebene oder -richtung orientierten Verschieberichtung von oben und unten in die Transportebene bewegt werden. Das gemäß dieser Verfahrensvariante mindestens zweiteilige Schottelement kann senkrecht zur Transportebene oder -richtung von oben und unten in die Transportebene zugefahren werden, um die Anlagenbereiche weitestgehend voneinander abzutrennen und jegliche Berührungen von einem Anlagenbereich in den anderen hinein zu verhindern.

Bei dem Verfahren werden die beiden Schottwandabschnitte unabhängig voneinander bewegt und/oder angetrieben werden, sofern ein zwei oder mehrteiliges Schottelement zum Einsatz kommt. Es ist auch eine Verfahrensvariante denkbar, bei der das Schottelement mindestens vierteilig ist, wobei zwei Teile von unten nach oben und zwei Teile von oben nach unten in die Transportebene zugestellt werden können, wobei jeweils ein von oben nach unten und ein von unten nach oben bewegbares Teil auf einer Seite einer das Schott umgebenden Trennwand des Maschinenschutzes angeordnet ist.

Bei den beschriebenen Verfahrensvarianten ist jeweils vorgesehen, dass die Behältergreifer (z.B. Klammern) bei in die Transportebene oder -richtung bewegtem einoder mehrteiligem Schottelement jeweils im Übergabebereich bleiben und dort berührungslos zumindest teilweise vom Schottelement abgedeckt sind. Zudem sind bei geschlossenem Schott die Spaltmaße so klein sind, dass nicht manuell hindurchgegriffen werden kann.

Außerdem ist das Schottelement vorzugsweise so breit, dass bei geschlossenem Schott keine beweglichen Teile auf der jeweilig anderen Seite zu erreichen sind. Die Konturen der jeweils benachbarten Transfer- oder Übergabesterne und die Kontur des Schottelementes sind so aufeinander abgestimmt und angepasst, dass ein gleichmäßig kleiner Spalt erzeugt werden kann.

Das Verfahren sieht zudem vorzugsweise vor, dass die jeweils innerhalb des Übergabebereichs befindlichen Behältergreifer (z.B. Klammern) von wenigstens zwei benachbarten umlaufenden Fördereinrichtungen bei in die Transportebene oder -richtung bewegtem ein- oder mehrteiligem Schottelement annähernd vollständig abgedeckt sind.

Das Verfahren kann zudem vorsehen, dass die jeweils innerhalb des Übergabebereichs befindlichen Behältergreifer (z.B. Klammern) zumindest eines von wenigstens zwei benachbarten umlaufenden Fördereinrichtungen bei in die Transportebene oder -richtung bewegtem ein- oder mehrteiligem Schottelement annähernd vollständig abgedeckt werden, wobei auch der oben erwähnte und definierte Übergabebereich komplett oder annähernd komplett abgeschottet wird.

Es sei an dieser Stelle ausdrücklich erwähnt, dass alle Aspekte und Ausführungsvarianten, die weiter oben oder auch in der nachfolgenden Figurenbeschreibung im Zusammenhang mit der erfindungsgemäßen Behälterbehandlungsmaschine oder Behälterbehandlungsanlage erläutert wurden, gleichermaßen Teilaspekte des erfindungsgemäßen Verfahrens zum Herstellen zweier getrennter Bereiche in einer solchen Behälterbehandlungsanlage betreffen oder sein können. Wenn daher an einer Stelle bei der Beschreibung oder auch bei den Anspruchsdefinitionen zur erfindungsgemäßen Behälterbehandlungsanlage von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zum Herstellen zweier getrennter Bereiche in einer Behälterbehandlungsanlage erläutert wurden, gleichermaßen Teilaspekte der erfindungsgemäßen Behälterbehandlungsanlage betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Behälterbehandlungsan lage.

Außerdem sei an dieser Stelle ausdrücklich klargestellt, dass die erfindungsgemäße Behälterbehandlungsanlage sowie das erfindungsgemäße Verfahren zum Herstellen zweier getrennter Bereiche in einer solchen Behälterbehandlungsanlage generell die Behandlung von Behältern zum Gegenstand hat, was sowohl die Herstellung von Behältern, bspw. durch Blasumformen bzw. Streckblasumformen von Vorformlingen aus thermoplastischem Kunststoff, deren weitere Behandlung wie etwa ihre Sterilisation, ihre Befüllung mit Flüssigkeiten, Getränken oder anderen flüssigen oder viskosen Stoffen, sowie ihre Etikettierung oder auch ihre Bedruckung auf den Behältermantelflächen umfassen kann. Neben der Etikettierung der Behälter kommen auch andere Behandlungsschritte für die Behälter in Frage. So können die allgemein als Behälterbehandlung bezeichneten Behandlungsschritte bspw. auch den Direktdruck von definierten Arealen der Behältermantelflächen umfassen, ohne dass dies oben gesondert erwähnt wurde. Wenn daher im vorliegenden Zusammenhang allgemein von einer Behälterbehandlung oder konkreter von einer Etikettierung die Rede ist, so meint dies generell immer auch das Bedrucken der Behälter mit Druckfarbe, bspw. durch Aufbringen von Bedruckungen mittels eines Direktdruckverfahrens. Ebenso ist mit Behälterbehandlung die Befüllung und das Verschließen von Behältern gemeint; darüber hinaus auch die den genannten Behandlungsschritten vorausgehende Herstellung bzw. Umformung der Behälter, um sie überhaupt befüllen und/oder etikettieren bzw. bedrucken zu können.

Anstelle von Etikettieren kann im Zusammenhang mit der Erfindung auch ein Bedrucken der Behälter erfolgen. Insbesondere kann einer der Anlagenbereichs statt mit einer Etikettiermaschine mit einer Druckmaschine zum Bedrucken von Behältern ausgestattet sein.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Behälterbehandlungsanlage mit erfindungsgemäß ausgestalteten Schottelementen zur Abtrennung jeweils benachbarter Anlagenbereiche ausgestattet sein. Der erste Anlagenbereich kann in einer beispielhaften Konfiguration etwa durch eine Blasmaschine zum Blasumformen oder Streckblasformen von hier nicht näher definierten Getränkebehältern aus thermoplastischen Vorformlingen gebildet sein, während der dem ersten Anlagenbereich benachbarte zweite Anlagenbereich bspw. durch eine Etikettiermaschine zum Etikettieren und/oder Direktbedrucken der in der Blasmaschine geformten Behälter gebildet sein kann. Ein dritter Anlagenbereich, der sich an den zweiten Anlagenbereich mit der Etikettiermaschine anschließt und zu diesem benachbart ist, kann bspw. durch einen Füller gebildet sein, mit dem die zuvor etikettierten Behälter mit Flüssigkeit oder einem Getränk befüllt werden können. Wahlweise kann der Etikettiermaschine ein Magazin und/oder eine Zuführeinrichtung für selbstklebende oder mittels Leim zu beaufschlagende Etiketten zugeordnet sein.

Sowohl die Blasmaschine als auch die Etikettiermaschine sowie der Füller können jeweils als sog. Rundläufermaschinen ausgebildet sein, was ein um eine im Wesentlichen vertikale Achse mit definierbarer und/oder veränderlicher Umdrehungsgeschwindigkeit rotierendes Karussell meint, an dessen Außenumfang in regelmäßigen Abständen voneinander eine Vielzahl von, insbesondere steuerbaren, Behältergreifern angeordnet ist, die bspw. durch steuerbare Klammern, Dorne oder Schieber o. dgl. gebildet sein können, um damit die zu handhabenden, zu etikettierenden und zu befüllenden Behälter erfassen, halten, greifen und an nachgeordnete Handhabungs- und/oder Fördereinrichtungen übergeben zu können.

Diese umlaufenden Fördereinrichtungen können in der Praxis in aller Regel durch rotierende Übergabesterne oder Transfersterne gebildet sein, die an ihrem jeweiligen Außenumfang eine Vielzahl der genannten Behältergreifer, Klammern, Dorne, Schieber etc. aufweisen, so dass die Behälter in der gewünschten Weise gehandhabt und von einem Übergabe- oder Transferstern an den nächsten übergeben werden können. Der Blasmaschine mit ihrem um eine vertikale Achse rotierenden Blasrad kann weiterhin eine damit tangential kämmende erste Fördereinrichtung in Form eines um eine vertikale Achse rotierenden ersten Auslaufsterns der Blasmaschine zugeordnet sein, der innerhalb des ersten Anlagenbereichs rotiert. Unmittelbar benachbart und in kämmendem Eingriff mit dem ersten Auslaufstern der Blasmaschine befindet sich beim hier beschriebenen Ausführungsbeispiel ein rotierender erster Einlaufstern der Etikettiermaschine, der sich wiederum mit dem um eine vertikale Achse rotierenden Karussell der Etikettiermaschine in kämmendem Eingriff befindet. Ebenfalls in kämmendem Eingriff mit dem rotierenden Karussell der Etikettiermaschine befindet sich ein zweiter Auslaufstern der Etikettiermaschine, an den sich ein damit kämmender zweiter Einlaufstern des Füllers anschließen kann, der wiederum in kämmendem Eingriff mit dem rotierenden Karussell des Füllers stehen und diesem die von der Etikettiermaschine übergebenen Behälter weiterreichen kann.

Die umlaufenden Fördereinrichtungen bzw. rotierenden Übergabe- oder Transfersterne definieren paarweise jeweils einen Übergabebereich, wobei jeder dieser Übergabebereiche von beiden jeweils benachbarten Fördereinrichtungen gemeinsam tangiert wird. Der erste Übergabebereich befindet sich zwischen dem ersten Auslaufstern der Blasmaschine und dem zu diesem unmittelbar benachbarten und mit diesem in kämmendem Eingriff befindlichen ersten Einlaufstern der Etikettiermaschine. Das erste Schottelement kann in diesen ersten Übergabebereich eingeschoben werden und trennt damit den ersten Anlagenbereich vom zweiten Anlagenbereich ab, sofern dies bspw. für Wartungs-, Reinigungs- und/oder Reparaturarbeiten erforderlich ist. Der zweite Übergabebereich befindet sich zwischen dem zweiten Auslaufstern der Etikettiermaschine und dem zu diesem unmittelbar benachbarten und mit diesem in kämmendem Eingriff befindlichen zweiten Einlaufstern des Füllers. Das zweite Schottelement kann bedarfsweise in diesen zweiten Übergabebereich eingeschoben werden und trennt damit den zweiten Anlagenbereich vom dritten Anlagenbereich ab, sofern dies bspw. für Wartungs-, Reinigungs- und/oder Reparaturarbeiten erforderlich ist.

Wahlweise können bei der hier beispielhaft beschriebenen Behälterbehandlungsanlage die erwähnten drei benachbarten Anlagenbereiche jeweils durch einen Maschinenschutz begrenzt und separat voneinander zugänglich sein, was bspw. für Wartungs-, Reinigungs- und/oder Reparaturarbeiten notwendig und sinnvoll ist. Dieser Maschinenschutz, der wahlweise eine gemeinsame Einhausung bilden oder für jeden der Anlagenbereiche separat ausgeführt sein kann, ist bspw. durch ein normalerweise geschlossenes Blechgehäuse mit transparenten Bereichen und gegen unbefugtes Öffnen gesicherten Klappen oder Türen gebildet, wobei die Klappen oder Türen nur im Stillstand des jeweiligen Maschinenteils zu öffnen sind und ansonsten verriegelt sein müssen. Um einen nicht gewollten Eingriff in drehende Teile eines jeweils benachbarten Anlagenbereichs zu verhindern, sind in diesem Fall die Schottelemente zu schließen und in die Übergabebereiche einzubringen, womit die gewünschte Absicherung gegen Berührungen und Durchgriffe in benachbarte Anlagenbereiche erreicht werden kann.

Wie oben erläutert, ist die erfindungsgemäße Behälterbehandlungsanlage insbesondere dadurch charakterisiert, dass die benachbarten Anlagenbereiche jeweils durch ein bewegliches, ein- oder mehrteiliges Schottelement, welches in einen Transportund/oder Übergabeweg der Behälter zwischen die mindestens zwei Fördereinrichtungen eingebracht oder von dort entfernt werden kann, zumindest teilweise voneinander abtrennbar sind. Hierbei ist vorgesehen, dass das bspw. durch eine ein- oder mehrteilige Schottwand gebildete Schottelement beim Abtrennen der in den jeweiligen Anlagenbereichen befindlichen mindestens zwei Fördereinrichtungen voneinander oder beim Freigeben des Transport- und/oder Übergabeweges zwischen den Fördereinrichtungen einer im Wesentlichen senkrecht zur Transportebene oder Transportrichtung der Behälter orientierten Bewegungsrichtung folgt. Während des normalen Produktionsbetriebes sind die Schottelemente jeweils geöffnet; dadurch können die Behälter an den Schnittstellen der Module, gebildet jeweils durch den ersten Übergabebereich zwischen dem ersten Anlagenbereich mit der Blasmaschine und dem zweiten Anlagenbereich mit der Etikettiermaschine sowie durch den zweiten Übergabebereich zwischen dem zweiten Anlagenbereich mit der Etikettiermaschine und dem dritten Anlagenbereich mit dem Füller, übergeben werden.

Wird vom Produktionsbetrieb in den Wartungs- bzw. Sicherheitsbetrieb gewechselt, wird zumindest eines der beiden Schottelemente oder werden ggf. auch beide Schottelemente geschlossen. Hierbei kann insbesondere vorgesehen sein, dass das Schottelement beim Abtrennen der in den jeweiligen Anlagenbereichen befindlichen mindestens zwei Fördereinrichtungen voneinander die, insbesondere steuerbaren, Behältergreifer zumindest einer der beiden Fördereinrichtungen im Übergabebereich weitgehend gegenüber demjenigen Anlagenbereich abschirmt, in dem sich die jeweils andere Fördereinrichtung befindet. Dadurch ist es nicht mehr möglich, dass von einem Modul bzw. vom Anlagenbereich in den benachbarten Anlagenbereich oder umgekehrt hindurchgegriffen werden und sich dabei an drehenden Bauteilen verletzt werden kann. In gleicher Weise ist es nicht mehr möglich, dass von einem Modul bzw. vom Anlagenbereich in den benachbarten Anlagenbereich oder umgekehrt hindurchgegriffen werden und sich dabei an drehenden Bauteilen verletzt werden kann. Dadurch sind die Module bzw. die Anlagenbereiche im sicherheitstechnischen Sinne voneinander entkoppelt und gegeneinander abgeschottet.

Wahlweise kann das erste Schottelement, das sich zwischen dem ersten Anlagenbereich mit der Blasmaschine und dem zweiten Anlagenbereich mit der Etikettiermaschine befindet, durch zwei jeweils in vertikaler Richtung verstellbare Schottwandabschnitte gebildet sein, nämlich einen vertikal verstellbaren oberen Schottwandabschnitt und einen vertikal verstellbaren unteren Schottwandabschnitt, die aufeinander zu oder voneinander weg bewegt werden können. Das zweite Schottelement zwischen dem zweiten Anlagenbereich und dem dritten Anlagenbereich mit dem darin befindlichen Füller ist ebenso aufgebaut wie das erste Schottelement und funktioniert in gleicher Weise, so dass die Beschreibung der Funktionsweise nur eines dieser Schottelemente an dieser Stelle genügen soll.

Die jeweils auf vertikal angeordneten rotierbaren Wellen drehfest montierten umlaufenden Fördereinrichtungen können durch den dem ersten Anlagenbereich zugeordneten ersten Auslaufstern der Blasmaschine sowie den dem zweiten Anlagenbereich zugeordneten ersten Einlaufstern der Etikettiermaschine gebildet sein. Sowohl der erste Auslaufstern als auch der erste Einlaufstern weist jeweils eine in horizontaler Ebene rotierende Scheibe mit daran am jeweiligen Außenumfang angeordneten Behältergreifern auf. Der Bereich, an dem sich die von den Behältergreifern beschriebenen kreisförmigen Bewegungskurven schneiden, bildet den im vorliegenden Zusammenhang als Übergabebereich bezeichneten abzudeckenden Bereich, der mittels der verstellbaren Schottelemente gegen Berührungen zu sichern ist.

Wie erwähnt, kann das Schottelement in der hier beschriebenen Ausführungsvariante durch die beiden separat und unabhängig voneinander in ungefähr vertikaler Richtung verschiebbaren oberen und unteren Schottwandabschnitte gebildet sein, die jeweils in einer im Wesentlichen senkrecht zu einer ungefähr horizontalen Transportebene oder -richtung orientierten Verschieberichtung von oben und unten in die Transportebene bewegbar sind. Der zwischen den beiden geschlossenen und in minimalem Abstand befindlichen oberen und unteren Schottwandabschnitten verbleibende Luftspalt ist maximal so groß zu bemessen, dass die Behältergreifer gerade noch berührungsfrei hindurchpassieren können.

Durch die wahlweise ausreichend stark dimensionierten oder jeweils doppelwandige Ausführung der Schottwandabschnitte können ausreichende horizontale Sicherheitsabstände zwischen einem Innenraum eines Anlagenbereiches und der jeweils zu diesem Anlagenbereich weisenden äußeren Kante des jeweils dem Anlagenbereich am nächsten befindlichen Behältergreifers realisiert werden. Dieser Behältergreifer befindet sich in dieser gezeigten Position innerhalb des Übergabebereichs und ist deshalb in ausreichendem Sicherheitsabstand gegenüber dem jeweils anderen Anlagenbereich abzuschirmen, was jedoch durch die doppelwandigen Schottwandabschnitte in der gezeigten Weise erreicht werden kann.

Bei einer alternativen Ausführungsvariante des zweiteiligen Schottelements mit seinen in vertikaler Richtung gegeneinander zustellbaren oberen und unteren Schottwandabschnitten kann auch vorgesehen sein, dass diese jeweils nicht doppelwandig ausgestaltet sind, sondern dass diese jeweils an ihren zueinander weisenden und zum Luftspalt weisenden oberen bzw. unteren Kanten mit horizontalen Abschirmblechen ausgestattet sind. Diese Abschirmbleche dienen dazu, die Behältergreifer, die in der beschriebenen Weise durch Klammern oder Klammergreifer o. dgl. gebildet sein können, innerhalb des gesamten Übergabebereiches weitgehend nach oben und unten abzudecken und abzuschirmen. Zu diesem Zweck sind diese Abschirmbleche mit einer zur jeweiligen rotierenden Scheibe des abzuschirmenden Einlauf- oder Auslaufsterns weisenden konkaven Kantenkontur ausgestattet, wobei diese konkave Kante in ihrer Kontur und in ihrem Radius vorzugsweise exakt an den Radius und die Kontur der auf gleicher Höhe befindlichen Scheibe des jeweils abzuschirmenden Einlauf- oder Auslaufsterns angepasst ist, so dass dessen Außenumfang in geringem Abstand zur konkaven Kante umlaufen kann, während die jeweils im Übergabebereich befindlichen Behältergreifer des entsprechenden abzuschirmenden Einlauf- oder Auslaufsterns durch die oberhalb und unterhalb der Behältergreifer und in geringem Abstand zu diesen befindlichen Abschirmbleche abgedeckt sind.

Es ist somit keinerlei Verstellung der Behältergreifer erforderlich, bspw. ein Verschwenken oder tangentiales Anlegen an den Außenumfang des jeweiligen Transferoder Übergabesterns, da die Konturen der jeweiligen Schottwandabschnitte mit ihren jeweiligen oberen und unteren Abschirmblechen an die Konturen der typischerweise in radialer Richtung am Außenumfang der Sterne herausragenden Behältergreifer angepasst sind. Die umlaufenden Fördereinrichtungen bzw. die rotierenden Transferoder Übergabesterne weisen keine Hinterschnitte auf, so dass die Schleuse bzw. das Schottelement maximal zweiteilig ausgestaltet werden kann. D.h., mehr als zwei Einzelteile, die sich gegeneinander verstellen lassen, sind zur Ausbildung des Schottelementes nicht notwendig. Wahlweise können diese beiden Schottwandabschnitte unabhängig voneinander bewegt und in vertikalen Richtungen verstellt werden.

Wenn das Schottelement vollständig geöffnet ist, wobei der obere Schottwandabschnitt nach oben geschoben und der untere Schottwandabschnitt nach unten geschoben ist, verbleibt eine Öffnung zwischen dem ersten Anlagenbereich und dem angrenzenden zweiten Anlagenbereich, die groß genug ist für den kollisionsfreien Durchtritt der Behälter.

Bei einer weiteren Variante des Schottelements können geeignete Aktoren zum vertikalen Verschieben der beiden Schottwandabschnitte vorgesehen sein. So kann sich bspw. ein erster Stellzylinder mittig oberhalb des oberen Schottwandabschnittes befinden, der mittig an dessen oberer Kante angreift, so dass er durch Ausfahren einer Kolbenstange mittels pneumatischen oder hydraulischen Drucks oder bspw. durch Aktivieren eines elektromotorischen Linearantriebes den oberen Schottwandabschnitt in die geschlossene Stellung nach unten verschieben kann. Gleichermaßen kann sich ein zweiter Stellzylinder seitlich an der Öffnung und am seitlichen Rand des unteren Schottwandabschnittes befinden, der an dessen einer seitlichen Kante angreift, so dass er durch Ausfahren einer Kolbenstange mittels pneumatischen oder hydraulischen Drucks oder bspw. durch Aktivieren eines elektromotorischen Linearantriebes den unteren Schottwandabschnitt in die geschlossene Stellung nach oben verschieben kann.

Die mittels der geschlossenen Schottwandabschnitte des ersten Schottelements trennbaren Anlagenbereiche lassen sich in unabhängige Sicherheitskreise aufteilen, in die eingegriffen werden kann, ohne dass die beweglichen Teile des jeweils angrenzenden Bereiches durch manuellen Eingriff erreicht oder berührt werden können. Die Abschirmbleche, die zu beiden Seiten in die Anlagenbereiche hineinragen, können durch angepasste Gestaltung diesen angestrebten Berührschutz nochmals verbessern, da sie den kompletten Übergabebereich oben und unten sehr eng abdecken und zwischen den zueinander weisenden oberen und unteren Kanten der Schottwandabschnitte jeweils nur einen schmalen Luftspalt offen lassen können, der für einen manuellen Eingriff oder Durchgriff deutlich zu schmal ist.

Jedes in der Behälterbehandlungsanlage vorhandene Schottelement ist vorzugsweise so ausgelegt ist, dass sich während des Sicherheitsbetriebes die Einlaufund Auslaufsterne weiter drehen können. Da weder Behältergreifer noch Klammern noch andere Bauteile der genannten Sterne zurückzuziehen sind, können die Schottelemente nicht durchgefahren und komplett geschlossen werden, da sie sonst mit den Behältergreifern oder Klammern der Sterne kollidieren würden. Dies hat zur Folge, dass die beiden Schnittstellen der Module nicht komplett geschlossen werden können. Jedoch werden die oberen und unteren Schottwandabschnitte der jeweiligen Schottelemente so nah in vertikaler Richtung aneinander geschoben, bis jeweils die Ober- und Unterseite der Behältergreifer oder Klammern beider Sterne fast berührt werden. Die beiden Schottwandabschnitte sind so gestaltet, dass der entstehende Luftspalt so gering ist, dass damit auch die geforderten Sicherheitsabstände nach DIN EN 13857 eingehalten werden können. Auf diese Weise ist eine Berührung des nächsten drehenden Teils ausgeschlossen, wodurch auch keine Verletzungsgefahr besteht.

Wahlweise kann bei einer weiteren Ausführungsform des beweglichen Schottelements ein Bereich, der sich im Wesentlichen parallel zu der Transportebene erstreckt, mit einer Kontur ausgestattet, die im Wesentlichen einer Kontur der von diesem Schottelement abgedeckten Fördereinrichtung entspricht. Diesen Bereich bildet insbesondere das Abschirmblech. Die Kontur ist vorzugsweise im Wesentlichen bogen- bzw. teilkreisförmig ausgebildet und erstreckt sich im Wesentlichen parallel zu der Transportebene. Besonders bevorzugt ist die Kontur konzentrisch zu einer Drehachse der von diesem Schottelement abgedeckten Fördereinrichtung ausgebildet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer beispielhaft zu verstehenden Konfiguration einer erfindungsgemäßen Behälterbehandlungsanlage.
Fig. 2 zeigt in insgesamt vier schematischen Ansichten (Fig. 2A, Fig. 2B, Fig. 2C und Fig. 2D) eine erste Ausführungsvariante eines beweglichen Schottelements zur Abschottung benachbarter Anlagenbereiche.
Fig. 3 zeigt in insgesamt drei schematischen Perspektivansichten (Fig. 3A, Fig. 3B und Fig. 3C) eine zweite Variante des beweglichen Schottelements zur Abschottung benachbarter Anlagenbereiche.
Fig. 4 zeigt in zwei schematischen Perspektivansichten (Fig. 4A und Fig. 4B) die zweite Variante des beweglichen Schottelements, das sich in geöffneter Stellung befindet und damit die benachbarten Anlagenbereiche nicht abschottet.
Fig. 5 zeigt in zwei schematischen Perspektivansichten (Fig. 5A und Fig. 5B) die zweite Variante des beweglichen Schottelements, das sich in geschlossener Stellung befindet und damit die benachbarten Anlagenbereiche gegeneinander abschottet.
Fig. 6 zeigt eine schematische Draufsicht auf die in den Figuren 4A bis 5B gezeigte zweite Variante des beweglichen Schottelements.
Fig. 7 zeigt eine weitere Ausführungsform eines beweglichen Schottelements.

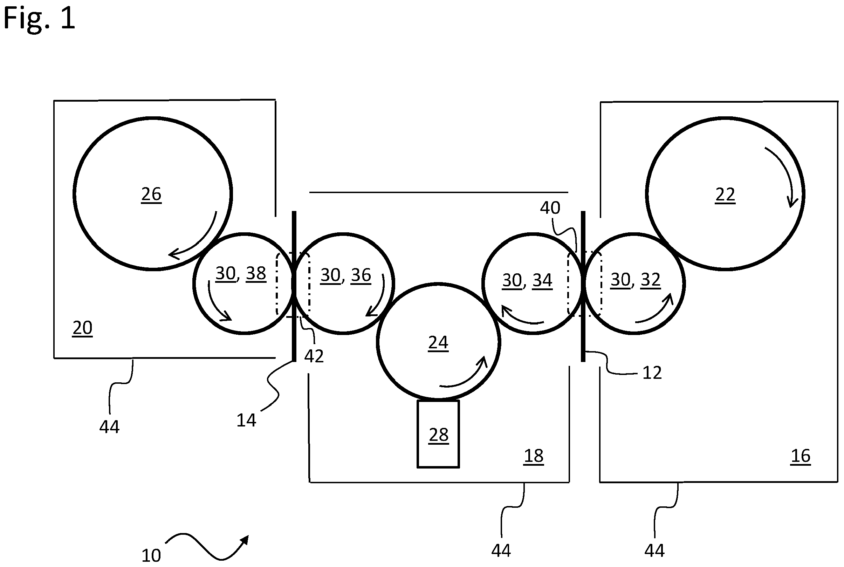

Für gleiche oder gleich wirkende Elemente der Erfindung verwenden die Figuren 1 bis 7 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Behälterbehandlungsanlage oder das erfindungsgemäße Verfahren ausgestaltet sein können und stellen keine abschließende Begrenzung dar. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

Die stark schematisierte Draufsicht der Fig. 1 zeigt eine mögliche und in der Praxis häufig eingesetzte Konfiguration einer Behälterbehandlungsanlage 10, die hier mit erfindungsgemäß ausgestalteten Schottelementen 12 und 14 zur Abtrennung jeweils benachbarter Anlagenbereiche 16, 18 und 20 ausgestattet ist. Der erste Anlagenbereich 16 kann in der gezeigten Konfiguration bspw. durch eine Blasmaschine 22 zum Blasumformen oder Streckblasformen von hier nicht näher dargestellten Getränkebehältern aus thermoplastischen Vorformlingen gebildet sein, während der dem ersten Anlagenbereich 16 benachbarte zweite Anlagenbereich 18 bspw. durch eine Etikettiermaschine 24 zum Etikettieren und/oder Direktbedrucken der in der Blasmaschine 22 geformten Behälter gebildet sein kann. Der dritte Anlagenbereich 20, der sich an den zweiten Anlagenbereich 18 mit der Etikettiermaschine 24 anschließt und zu diesem benachbart ist, kann bspw. durch einen Füller 26 gebildet sein, mit dem die zuvor etikettierten Behälter mit Flüssigkeit oder einem Getränk befüllt werden können. Wie es die Fig. 1 schematisch andeutet, kann der Etikettiermaschine 24 bspw. ein Magazin 28 und/oder eine Zuführeinrichtung für selbstklebende oder mittels Leim zu beaufschlagende Etiketten zugeordnet sein.

Sowohl die Blasmaschine 22 als auch die Etikettiermaschine 24 sowie der Füller 26 können jeweils als sog. Rundläufermaschinen ausgebildet sein, was ein um eine im Wesentlichen vertikale Achse mit definierbarer und/oder veränderlicher Umdrehungsgeschwindigkeit rotierendes Karussell meint, an dessen Außenumfang in regelmäßigen Abständen voneinander eine Vielzahl von, insbesondere steuerbaren, Behältergreifern angeordnet ist, die bspw. durch steuerbare Klammern, Dorne oder Schieber o. dgl. gebildet sein können, um damit die zu handhabenden, zu etikettierenden und zu befüllenden Behälter erfassen, halten, greifen und an nachgeordnete Handhabungs- und/oder Fördereinrichtungen 30 übergeben zu können.

Diese umlaufenden Fördereinrichtungen 30 sind im gezeigten Ausführungsbeispiel sowie auch in der Praxis in aller Regel durch rotierende Übergabesterne oder Transfersterne gebildet, die an ihrem jeweiligen Außenumfang eine Vielzahl der genannten Behältergreifer, Klammern, Dorne, Schieber etc. aufweisen, so dass die Behälter in der gewünschten Weise gehandhabt und von einem Übergabe- oder Transferstern an den nächsten übergeben werden können. Wie es die Fig. 1 erkennen lässt, ist der Blasmaschine 22 mit ihrem um eine vertikale Achse rotierenden Blasrad (siehe Pfeilrichtung) eine damit tangential kämmende erste Fördereinrichtung 30 in Form eines um eine vertikale Achse rotierenden ersten Auslaufsterns 32 der Blasmaschine 22 zugeordnet, der innerhalb des ersten Anlagenbereichs 16 rotiert. Unmittelbar benachbart und in kämmendem Eingriff mit dem ersten Auslaufstern 32 der Blasmaschine befindet sich ein rotierender erster Einlaufstern 34 der Etikettiermaschine 24, der sich wiederum mit dem um eine vertikale Achse rotierenden Karussell der Etikettiermaschine 24 in kämmendem Eingriff befindet. Ebenfalls in kämmendem Eingriff mit dem rotierenden Karussell der Etikettiermaschine 24 befindet sich ein zweiter Auslaufstern 36 der Etikettiermaschine 24, an den sich ein damit kämmender zweiter Einlaufstern 38 des Füllers 26 anschließt, der wiederum in kämmendem Eingriff mit dem rotierenden Karussell des Füllers 26 steht und diesem die von der Etikettiermaschine 24 übergebenen Behälter weiterreicht.

Die umlaufenden Fördereinrichtungen 30 bzw. rotierenden Übergabe- oder Transfersterne 32 und 34 sowie 36 und 38 definieren paarweise jeweils einen Übergabebereich 40 bzw. 42, wobei jeder dieser Übergabebereiche 40 und 42 von beiden jeweils benachbarten Fördereinrichtungen 30 gemeinsam tangiert wird. Der erste Übergabebereich 40 befindet sich zwischen dem ersten Auslaufstern 32 der Blasmaschine 22 und dem zu diesem unmittelbar benachbarten und mit diesem in kämmendem Eingriff befindlichen ersten Einlaufstern 34 der Etikettiermaschine 24. Das erste Schottelement 12 kann in diesen ersten Übergabebereich 40 eingeschoben werden und trennt damit den ersten Anlagenbereich 16 vom zweiten Anlagenbereich 18 ab, sofern dies bspw. für Wartungs-, Reinigungs- und/oder Reparaturarbeiten erforderlich ist. Der zweite Übergabebereich 42 befindet sich zwischen dem zweiten Auslaufstern 36 der Etikettiermaschine 24 und dem zu diesem unmittelbar benachbarten und mit diesem in kämmendem Eingriff befindlichen zweiten Einlaufstern 38 des Füllers 26. Das zweite Schottelement 14 kann bedarfsweise in diesen zweiten Übergabebereich 42 eingeschoben werden und trennt damit den zweiten Anlagenbereich 18 vom dritten Anlagenbereich 20 ab, sofern dies bspw. für Wartungs-, Reinigungs- und/oder Reparaturarbeiten erforderlich ist.

Wie es die Fig. 1 andeutungsweise erkennen lässt, sind bei der gezeigten Behälterbehandlungsanlage 10 die erwähnten drei benachbarten Anlagenbereiche 16, 18 und 20 jeweils durch einen Maschinenschutz 44 begrenzt und separat voneinander zugänglich, bspw. für Wartungs-, Reinigungs- und/oder Reparaturarbeiten. Dieser Maschinenschutz 44, der wahlweise eine gemeinsame Einhausung bilden oder für jede der Anlagenbereiche 16, 18 und 20 separat ausgeführt sein kann, ist bspw. durch ein normalerweise geschlossenes Blechgehäuse mit transparenten Bereichen und gegen unbefugtes Öffnen gesicherten Klappen oder Türen gebildet, wobei die Klappen oder Türen nur im Stillstand des jeweiligen Maschinenteils 22, 24, 26, 28 zu öffnen sind und ansonsten verriegelt sein müssen. Um einen nicht gewollten Eingriff in drehende Teile eines jeweils benachbarten Anlagenbereichs 16, 18 und/oder 20 zu verhindern, sind in diesem Fall die Schottelemente 12 und/oder 14 zu schließen und in die Übergabebereiche 40 bzw. 42 einzubringen, womit die gewünschte Absicherung gegen Berührungen und Durchgriffe in benachbarte Anlagenbereiche 16, 18 und/oder 20 erreicht werden kann.

Wie oben erläutert, ist die erfindungsgemäße Behälterbehandlungsanlage 10 dadurch charakterisiert, dass die benachbarten Anlagenbereiche 16, 18 und/oder 20 jeweils durch ein bewegliches, ein- oder mehrteiliges Schottelement 12 und 14, welches in einen Transport- und/oder Übergabeweg der Behälter zwischen die mindestens zwei Fördereinrichtungen 30 eingebracht oder von dort entfernt werden kann, zumindest teilweise voneinander abtrennbar sind. Hierbei ist vorgesehen, dass das bspw. durch eine ein- oder mehrteilige Schottwand gebildete Schottelement 12, 14 beim Abtrennen der in den jeweiligen Anlagenbereichen 16, 18 und/oder 20 befindlichen mindestens zwei Fördereinrichtungen 30 voneinander oder beim Freigeben des Transport- und/oder Übergabeweges zwischen den Fördereinrichtungen 30 einer im Wesentlichen senkrecht zur Transportebene oder Transportrichtung der Behälter orientierten Bewegungsrichtung folgt. Während des normalen Produktionsbetriebes sind die Schottelemente 12 und 14 jeweils geöffnet; dadurch können die Behälter an den Schnittstellen der Module, gebildet jeweils durch den ersten Übergabebereich 40 zwischen dem ersten Anlagenbereich 16 mit der Blasmaschine 22 und dem zweiten Anlagenbereich 18 mit der Etikettiermaschine 24 sowie durch den zweiten Übergabebereich 42 zwischen dem zweiten Anlagenbereich 18 mit der Etikettiermaschine 24 und dem dritten Anlagenbereich 20 mit dem Füller 26, übergeben werden.

Wird vom Produktionsbetrieb in den Wartungs- bzw. Sicherheitsbetrieb gewechselt, wird zumindest eines der beiden Schottelemente 12 und 14 oder auch beide Schottelemente 12 und 14 geschlossen. Wie es die Fig. 1 schematisch andeutet, ist hierbei vorgesehen, dass das Schottelement 12 bzw. 14 beim Abtrennen der in den jeweiligen Anlagenbereichen 16, 18 und/oder 20 befindlichen mindestens zwei Fördereinrichtungen 30 voneinander die, insbesondere steuerbaren, Behältergreifer zumindest einer der beiden Fördereinrichtungen 30 im Übergabebereich 40 bzw. 42 weitgehend gegenüber demjenigen Anlagenbereich 16, 18 und/oder 20 abschirmt, in dem sich die jeweils andere Fördereinrichtung 30 befindet. Dadurch ist es nicht mehr möglich, dass von einem Modul bzw. vom Anlagenbereich 16 in den benachbarten Anlagenbereich 18 oder umgekehrt hindurchgegriffen werden und sich dabei an drehenden Bauteilen verletzt werden kann. In gleicher Weise ist es nicht mehr möglich, dass von einem Modul bzw. vom Anlagenbereich 18 in den benachbarten Anlagenbereich 20 oder umgekehrt hindurchgegriffen werden und sich dabei an drehenden Bauteilen verletzt werden kann. Dadurch sind die Module bzw. die Anlagenbereiche 16, 18 und/oder 20 im sicherheitstechnischen Sinne voneinander entkoppelt und gegeneinander abgeschottet.

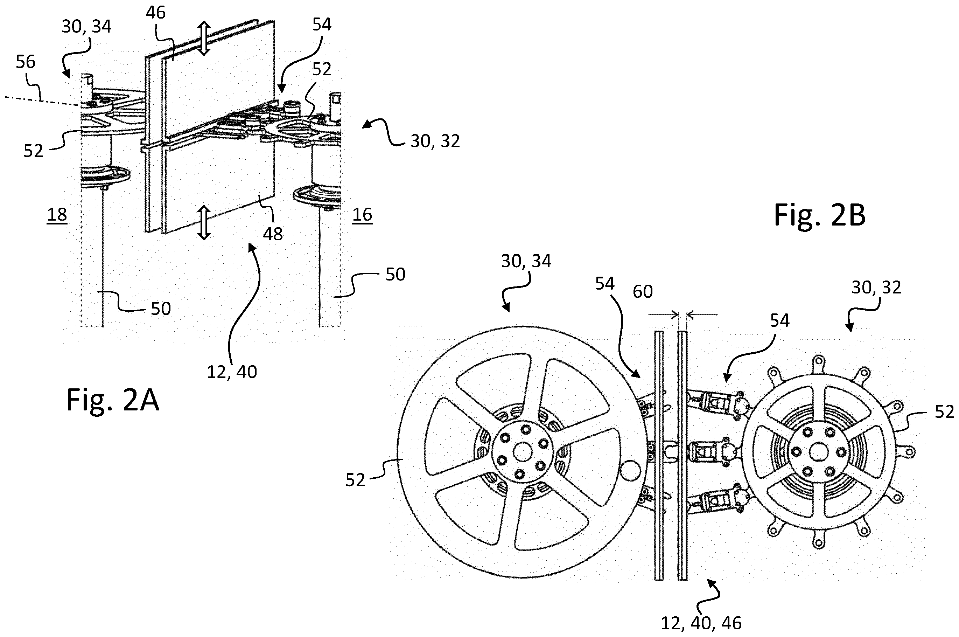

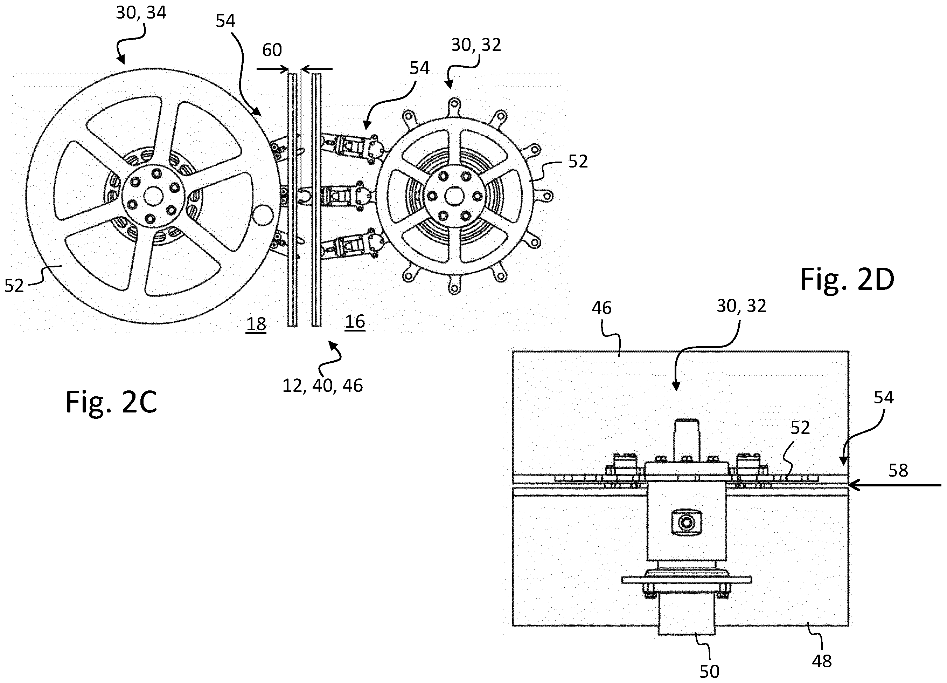

Die Fig. 2 zeigt in insgesamt vier schematischen Ansichten (Fig. 2A, Fig. 2B, Fig. 2C und Fig. 2D) eine erste Ausführungsvariante des bereits in Fig. 1 in einer Draufsicht andeutungsweise erkennbaren beweglichen Schottelements 12, 14 zur Abschottung jeweils benachbarter Anlagenbereiche 16 und 18 oder 18 und 20.

Wie es die schematische Perspektivansicht der Fig. 2A verdeutlicht, ist das hier beispielhaft gezeigte erste Schottelement 12, das sich zwischen dem ersten Anlagenbereich 16 mit der Blasmaschine 22 und dem zweiten Anlagenbereich 18 mit der Etikettiermaschine 24 (vgl. Fig. 1) befindet, durch zwei jeweils in vertikaler Richtung (siehe Doppelpfeile in Fig. 2A) verstellbare Schottwandabschnitte 46 und 48 gebildet, nämlich einen vertikal verstellbaren oberen Schottwandabschnitt 46 und einen vertikal verstellbaren unteren Schottwandabschnitt 48. Das in Fig. 1 gezeigte zweite Schottelement 14 zwischen dem zweiten Anlagenbereich 18 und dem dritten Anlagenbereich 20 mit dem darin befindlichen Füller 26 ist ebenso aufgebaut wie das erste Schottelement 12 und funktioniert in gleicher Weise, so dass die Beschreibung der Funktionsweise nur eines dieser Schottelemente 12 und 14 an dieser Stelle genügen soll.

In der Darstellung der Fig. 2A sind Teile der jeweils auf vertikal angeordneten rotierbaren Wellen 50 drehfest montierten umlaufenden Fördereinrichtungen 30 gezeigt, nämlich der dem ersten Anlagenbereich 16 zugeordnete erste Auslaufstern 32 der Blasmaschine 22 (in Fig. 2A rechts vorne) sowie der dem zweiten Anlagenbereich 18 zugeordnete erste Einlaufstern 34 der Etikettiermaschine 24 (in Fig. 2A links hinten). Dieser beiden rotierenden Fördereinrichtungen 30 sind auch in den schematischen Draufsichten der Figuren 2B und 2C erkennbar, auf die nachfolgend aufgrund der dadurch erreichten besseren Übersichtlichkeit ergänzend Bezug genommen wird. Sowohl der in Fig. 2A in Teilen und in den Figuren 2B und 2C in Draufsicht gezeigte erste Auslaufstern 32 als auch der in Fig. 2A in Teilen und in den Figuren 2B und 2C in Draufsicht gezeigte erste Einlaufstern 34 weist jeweils eine in horizontaler Ebene rotierende Scheibe 52 mit daran am jeweiligen Außenumfang angeordneten Behältergreifern 54 auf. Der Bereich, an dem sich die von den Behältergreifern 54 beschriebenen kreisförmigen Bewegungskurven schneiden, bildet den im vorliegenden Zusammenhang als Übergabebereich 40 bezeichneten abzudeckenden Bereich, der mittels der verstellbaren Schottelemente 12, 14 gegen Berührungen zu sichern ist.

Wie es die Figuren 2A bis 2D in verschiedenen Ansichten erkennen lassen, ist das Schottelement 12 in der gezeigten Ausführungsvariante durch die beiden separat und unabhängig voneinander in ungefähr vertikaler Richtung verschiebbaren oberen und unteren Schottwandabschnitte 46 und 48 gebildet, die jeweils in einer im Wesentlichen senkrecht zu einer ungefähr horizontalen Transportebene 56 oder -richtung orientierten Verschieberichtung von oben und unten in die Transportebene 56 bewegbar sind. Der zwischen den beiden geschlossenen und in minimalem Abstand befindlichen oberen und unteren Schottwandabschnitten 46 und 48 verbleibende Luftspalt 58 ist maximal so groß zu bemessen, dass die Behältergreifer 54 gerade noch berührungsfrei hindurchpassieren können (vgl. Fig. 2D).

Durch die wahlweise ausreichend stark dimensionierten oder jeweils doppelwandige Ausführung der Schottwandabschnitte 46 und 48, die in den Draufsichten der Figuren 2B und 2C verdeutlicht ist, können ausreichende horizontale Sicherheitsabstände 60 zwischen einem Innenraum eines Anlagenbereiches 16 oder 18 und der jeweils zu diesem Anlagenbereich 16 oder 18 weisenden äußeren Kante des jeweils dem Anlagenbereich 16 oder 18 am nächsten befindlichen Behältergreifers 54 realisiert werden. Dieser Behältergreifer 54 befindet sich in dieser gezeigten Position innerhalb des Übergabebereichs 40 und ist deshalb in ausreichendem Sicherheitsabstand 60 gegenüber dem jeweils anderen Anlagenbereich 16 oder 18 abzuschirmen, was jedoch durch die doppelwandigen Schottwandabschnitte 46 und 48 in der gezeigten Weise erreicht werden kann.

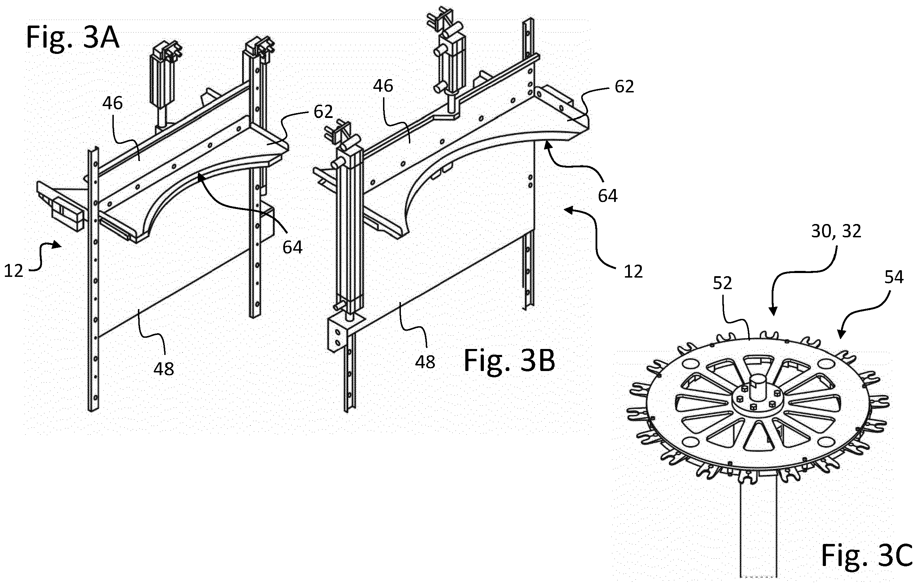

Die schematischen Perspektivdarstellungen der Figuren 3A, 3B und 3C zeigen eine alternative Ausführungsvariante des zweiteiligen Schottelements 12 mit den in vertikaler Richtung gegeneinander zustellbaren oberen und unteren Schottwandabschnitten 46 und 48. Diese sind hierbei nicht doppelwandig ausgestaltet wie die in den Figuren 2A bis 2D gezeigte Variante, sondern sind jeweils an ihren zueinander weisenden und zum Luftspalt 58 weisenden oberen bzw. unteren Kanten mit horizontalen Abschirmblechen 62 ausgestattet, welche die Behältergreifer 54, die in der gezeigten Weise durch Klammern oder Klammergreifer o. dgl. gebildet sind, innerhalb des gesamten Übergabebereiches 40 (vgl. Fig. 1) weitgehend nach oben und unten abdecken und abschirmen. Zu diesem Zweck sind diese Abschirmbleche 62 mit einer zur jeweiligen rotierenden Scheibe 52 des abzuschirmenden Einlauf- oder Auslaufsterns 32 oder 34 weisenden konkaven Kantenkontur ausgestattet, wobei diese konkave Kante 64 in ihrer Kontur und in ihrem Radius vorzugsweise exakt an den Radius und die Kontur der auf gleicher Höhe befindlichen Scheibe 52 des jeweils abzuschirmenden Einlauf- oder Auslaufsterns 32 oder 34 angepasst ist, so dass dessen Außenumfang in geringem Abstand zur konkaven Kante 64 umlaufen kann, während die jeweils im Übergabebereich 40 befindlichen Behältergreifer 54 des entsprechenden abzuschirmenden Einlauf- oder Auslaufsterns 32 oder 34 durch die oberhalb und unterhalb der Behältergreifer 54 und in geringem Abstand zu diesen befindlichen Abschirmbleche 62 abgedeckt sind.

Es ist somit keinerlei Verstellung der Behältergreifer 54 erforderlich, bspw. ein Verschwenken oder tangentiales Anlegen an den Außenumfang des jeweiligen Transferoder Übergabesterns 32 oder 34, da die Konturen der jeweiligen Schottwandabschnitte 46 und 48 mit ihren jeweiligen oberen und unteren Abschirmblechen 62 an die Konturen der typischerweise in radialer Richtung am Außenumfang der Sterne 32 und 34 herausragenden Behältergreifer 54 angepasst sind. Die umlaufenden Fördereinrichtungen 30 bzw. die rotierenden Transfer- oder Übergabesterne 32 und 34 weisen keine Hinterschnitte auf, so dass die Schleuse bzw. das Schottelement 12 maximal zweiteilig ausgestaltet werden kann.

Vorzugsweise sind bei den in den Figuren 2A bis 2D und 3A bis 3C gezeigten Varianten der erfindungsgemäßen Behälterbehandlungsanlage 10 die beiden Schottwandabschnitte 46 und 48 unabhängig voneinander bewegbar und in vertikalen Richtungen verstellbar.

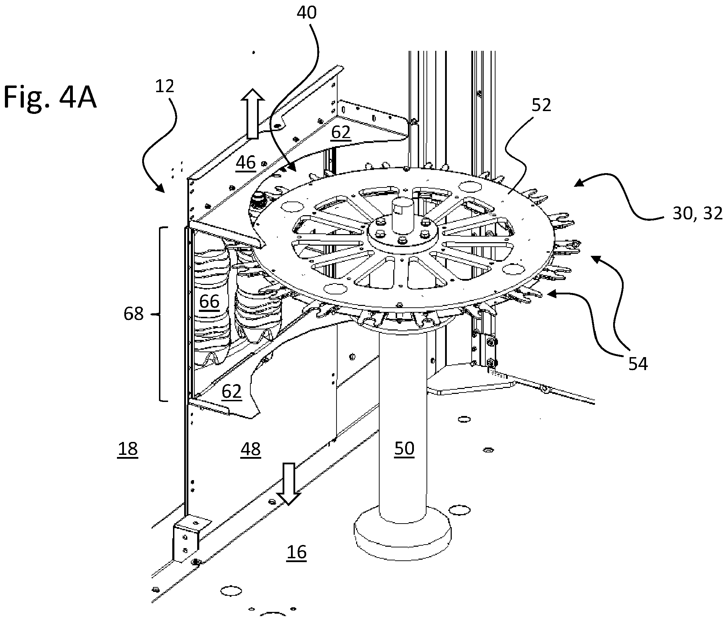

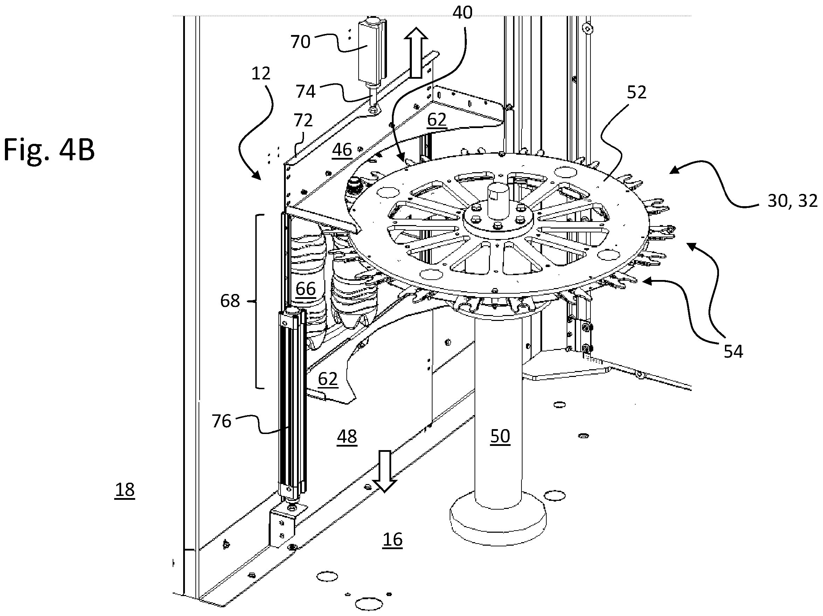

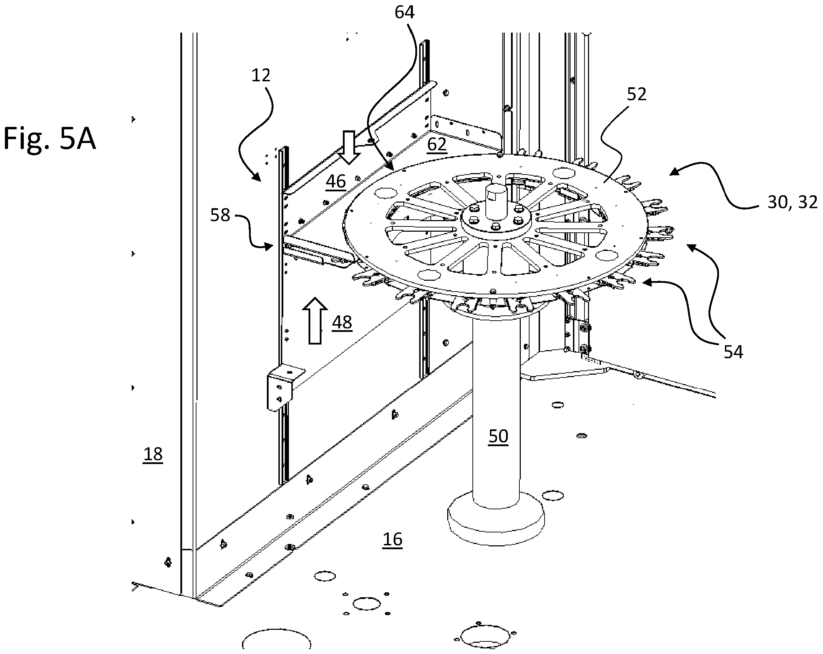

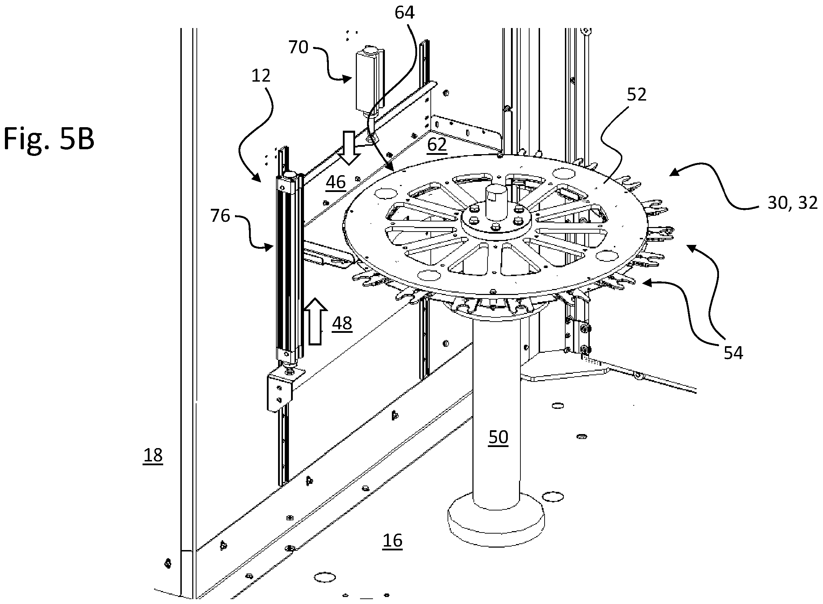

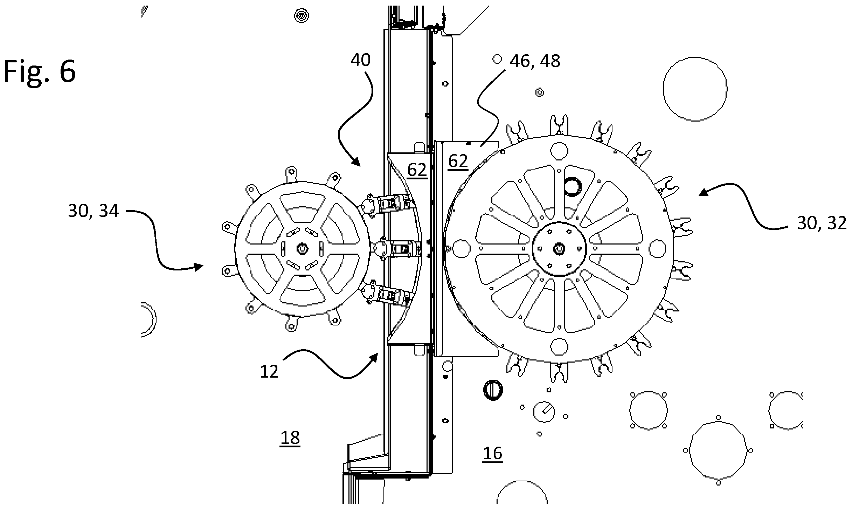

Die Figuren 4A bis 6 zeigen weitere Betriebsmodi der Behälterbehandlungsanlage 10, jeweils im Betriebsmodus mit geöffnetem Schottelement 12 bzw. 14 (Fig. 4A und Fig. 4B) und im Wartungsmodus mit geschlossenem Schottelement 12 bzw. 14 (Fig. 5A, Fig. 5B und Fig. 6), wobei im Wesentlichen die in den Figuren 3A und 3B gezeigte Variante des Schottelements 12 bzw. 14 gezeigt wird, bei denen die oberen und unteren Schottwandabschnitte 46 und 48 jeweils mit den die Behältergreifer 54 im Übergangsbereich 40 bzw. 42 oben und unten abdeckenden Abschirmbleche 62 ausgestattet sind.

So zeigt die schematische Perspektivansicht der Fig. 4A einen Teil einer Behälterbehandlungsanlage 10, nämlich den inneren Bereich eines von zwei benachbarten Anlagenteilen, der hier als der zweite Anlagenbereich 18 angenommen werden soll, in dem sich der erste Einlaufstern 34 der hier nicht gezeigten Etikettiermaschine befindet, der Getränkebehälter 66 vom angrenzenden ersten Auslaufstern 32 der Blasmaschine (hier nicht gezeigt) mittels der an seiner rotierenden Scheibe 52 angeordneten Behältergreifer 54 übernehmen und zur umlaufenden Etikettiermaschine weiterbefördern kann. Das hier gezeigte Schottelement 12 ist vollständig geöffnet, da der obere Schottwandabschnitt 46 nach oben geschoben und der untere Schottwandabschnitt 48 nach unten geschoben ist, so dass eine Öffnung 68 zwischen dem gezeigten ersten Anlagenbereich 16 und dem angrenzenden zweiten Anlagenbereich 18 verbleibt, die groß genug ist für den kollisionsfreien Durchtritt der Behälter 66.

Die in Fig. 4B gezeigte Variante des in derselben geöffneten Betriebslage befindlichen Schottelements 12 unterscheidet sich nur insofern von der in Fig. 4A gezeigten Variante, als hier Aktoren zum vertikalen Verschieben der beiden Schottwandabschnitte 46 und 48 eingezeichnet sind. So befindet sich ein erster Stellzylinder 70 mittig oberhalb des oberen Schottwandabschnittes 46 und greift mittig an dessen oberer Kante 72 an, so dass er durch Ausfahren einer Kolbenstange 74 mittels pneumatischen oder hydraulischen Drucks oder bspw. durch Aktivieren eines elektromotorischen Linearantriebes den oberen Schottwandabschnitt 46 in die geschlossene Stellung nach unten verschieben kann, wie dies in Fig. 5B gezeigt ist.

Gleichermaßen befindet sich ein zweiter Stellzylinder 76 seitlich an der Öffnung 68 und am seitlichen Rand des unteren Schottwandabschnittes 48 und greift an dessen einer seitlichen Kante an, so dass er durch Ausfahren einer Kolbenstange mittels pneumatischen oder hydraulischen Drucks oder bspw. durch Aktivieren eines elektromotorischen Linearantriebes den unteren Schottwandabschnitt 48 in die geschlossene Stellung nach oben verschieben kann, wie dies in Fig. 5B gezeigt ist.

Die beiden schematischen Perspektivansichten der Figuren 5A und 5B verdeutlichen die mittels der Abschirmbleche 62 der beiden Schottwandabschnitte 46 und 48 oben und unten abgedeckten Behältergreifer 54 im gezeigten ersten Übergabebereich 40, was durch die korrespondierenden Konturen der konkaven Kanten 64 der beiden Abschirmbleche 62 und der kreisrunden Außenkontur der rotierenden Scheibe 52 des im ersten Anlagenbereich 16 gezeigten ersten Auslaufsterns 32 gewährleistet ist, so dass der in Fig. 2D gezeigte schmale Luftspalt 58 zwischen den Schottwandabschnitten 46 und 48 bzw. zwischen deren oberen und unteren Abschirmblechen 62 gebildet ist.

Die schematische Draufsicht der Fig. 6 verdeutlicht nochmals die mittels der geschlossenen Schottwandabschnitte 46 und 48 des ersten Schottelements 12 getrennten Anlagenbereiche 16 und 18, die sich damit in unabhängige Sicherheitskreise aufteilen lassen, in die eingegriffen werden kann, ohne dass die beweglichen Teile des jeweils angrenzenden Bereiches durch manuellen Eingriff erreicht oder berührt werden können. Die in dieser Draufsicht deutlich erkennbaren Abschirmbleche 62, die zu beiden Seiten in die Anlagenbereiche 16 und 18 hineinragen, verbessern diesen angestrebten Berührschutz nochmals gegenüber der in den Figuren 2A bis 2D gezeigten doppelwandigen Variante des Schottelements 12, da sie den kompletten Übergabebereich 40 oben und unten sehr eng abdecken und zwischen den zueinander weisenden oberen und unteren Kanten der Schottwandabschnitte 46 und 48 jeweils nur den schmalen Luftspalt 58 (vgl. auch Fig. 2D) offen lassen, der für einen manuellen Eingriff oder Durchgriff deutlich zu schmal ist.

Jedes in der Behälterbehandlungsanlage 10 vorhandene Schottelement 12, 14 ist vorzugsweise so ausgelegt ist, dass sich während des Sicherheitsbetriebes die Einlaufund Auslaufsterne 32, 34, 36 und 38 weiter drehen können. Da weder Behältergreifer 54 noch Klammern noch andere Bauteile der genannten Sterne zurückgezogen werden, können die Schottelemente 12 und 14 nicht durchgefahren und komplett geschlossen werden, da sie sonst mit den Behältergreifern 54 oder Klammern der Sterne 32, 34, 36, 38 kollidieren würden. Dies hat zur Folge, dass die beiden Schnittstellen der Module nicht komplett geschlossen werden können. Jedoch werden die oberen und unteren Schottwandabschnitte 46 und 48 der jeweiligen Schottelemente 12, 14 so nah in vertikaler Richtung aneinander geschoben, bis jeweils die Ober- und Unterseite der Behältergreifer 54 oder Klammern beider Sterne fast berührt werden (siehe etwa Fig. 2D). Die beiden Schottwandabschnitte 46 und 48 sind so gestaltet, dass der entstehende Luftspalt 58 so gering ist, dass damit auch die geforderten Sicherheitsabstände nach DIN EN 13857 eingehalten werden können. Auf diese Weise ist eine Berührung des nächsten drehenden Teils ausgeschlossen, wodurch auch keine Verletzungsgefahr besteht.

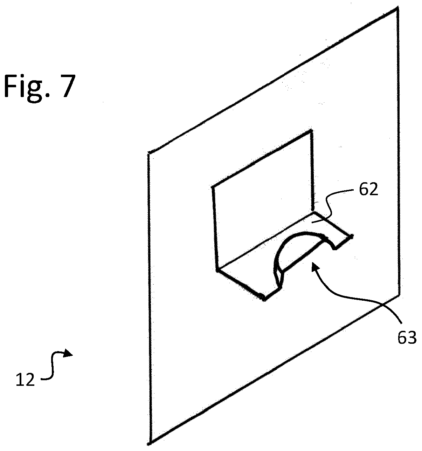

Die schematische und perspektivische Detailansicht der Fig. 7 zeigt eine weitere Ausführungsform eines beweglichen Schottelements 12. Hierbei ist ein Bereich, der sich im Wesentlichen parallel zu der Transportebene (Bezugszeichen 56, vgl. Figur 2A) mit einer Kontur 63 ausgestattet, die im Wesentlichen einer Kontur der von diesem Schottelement 12 abgedeckten Fördereinrichtung (nicht dargestellt) entspricht. Diesen Bereich bildet insbesondere das Abschirmblech 64. Die Kontur 63 ist vorzugsweise im Wesentlichen bogen- bzw. teilkreisförmig ausgebildet und erstreckt sich im Wesentlichen parallel zu der Transportebene (Bezugszeichen 56, vgl. Figur 2A). Besonders bevorzugt ist die Kontur 63 konzentrisch zu einer Drehachse der von diesem Schottelement 12 abgedeckten Fördereinrichtung (nicht dargestellt) ausgebildet.

Abschließend sei ein ergänzender Hinweis zu den vorstehenden Ausführungen gegeben: Wenn auch im Zusammenhang der Figuren und deren vorstehenden Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Behälterbehandlungsanlage und/oder Behälterbehandlungsmaschine oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Anlage oder Maschine zur Behälterbehandlung ein besseres Verständnis für den in den Ansprüchen sowie im allgemeinen Teil der Beschreibung allgemeiner und/oder abstrakter formulierten Erfindungsgedanken abzuleiten.

### Bezugszeichenliste

- 10: Behälterbehandlungsanlage, Behälterbehandlungsmaschine
- 12: erstes Schottelement, erste Schottwand
- 14: zweites Schottelement, zweite Schottwand
- 16: erster Anlagenbereich, erstes Modul
- 18: zweiter Anlagenbereich, zweites Modul
- 20: dritter Anlagenbereich, drittes Modul
- 22: Blasmaschine, Blasmodul
- 24: Etikettiermaschine, Etikettiermodul
- 26: Füller, Füllmodul
- 28: Magazin, Zuführeinrichtung (für Etiketten)
- 30: Fördereinrichtung
- 32: erster Auslaufstern (des Blasmoduls)
- 34: erster Einlaufstern (des Etikettiermoduls)
- 36: zweiter Auslaufstern (des Etikettiermoduls)
- 38: zweiter Einlaufstern (des Füllers)
- 40: erster Übergabebereich
- 42: zweiter Übergabebereich
- 44: Maschinenschutz, Einhausung
- 46: oberer Schottwandabschnitt
- 48: unterer Schottwandabschnitt
- 50: vertikale Welle
- 52: Scheibe
- 54: Behältergreifer
- 56: Transportebene, Transportrichtung
- 58: Luftspalt, vertikaler Luftspalt
- 60: Sicherheitsabstand, horizontaler Sicherheitsabstand
- 62: Abschirmblech
- 63: Kontur
- 64: konkave Kante
- 66: Getränkebehälter, Behälter
- 68: Öffnung
- 70: erster Stellzylinder
- 72: obere Kante
- 74: Kolbenstange
- 76: zweiter Stellzylinder

## Patentansprüche

1. Behälterbehandlungsanlage (10) mit mindestens zwei in jeweils unterschiedlichen, aber benachbarten Anlagenbereichen (16, 18, 20) umlaufenden Fördereinrichtungen (30), die jeweils eine Vielzahl von Behältergreifern (54) aufweisen und die paarweise jeweils einen Übergabebereich (40, 42) definieren, der von beiden benachbarten Fördereinrichtungen (30) gemeinsam tangiert wird,
wobei die mindestens zwei benachbarten Anlagenbereiche (16, 18, 20) jeweils durch einen Maschinenschutz (44) begrenzt und separat voneinander zugänglich sind,
und wobei die mindestens zwei Anlagenbereiche (16, 18, 20) durch ein bewegliches Schottelement (12, 14), welches in einen Transport- und/oder Übergabeweg von beförderten Behältern (66) zwischen die mindestens zwei Fördereinrichtungen (30) einbringbar oder von dort entfernbar ist, zumindest teilweise voneinander abtrennbar sind,
- wobei das Schottelement (12, 14) beim Abtrennen der in den jeweiligen Anlagenbereichen (16, 18, 20) befindlichen mindestens zwei Fördereinrichtungen (30) voneinander oder beim Freigeben des Transport- und/oder Übergabeweges zwischen den Fördereinrichtungen (30) einer im Wesentlichen senkrecht zur Transportebene (56) oder Transportrichtung der Behälter (66) orientierten Bewegungsrichtung folgt,
- und wobei das Schottelement (12, 14) beim Abtrennen der in den jeweiligen Anlagenbereichen (16, 18, 20) befindlichen mindestens zwei Fördereinrichtungen (30) voneinander die Behältergreifer (54) zumindest einer der beiden Fördereinrichtungen (30) im Übergabebereich (40, 42) weitgehend gegenüber demjenigen Anlagenbereich (16, 18, 20) abschirmt, in dem sich die jeweils andere Fördereinrichtung (30) befindet
, **dadurch gekennzeichnet, dass** das Schottelement (12, 14) durch wenigstens zwei separate und unabhängig voneinander in ungefähr vertikaler Richtung verschiebbare Schottwandabschnitte (46, 48) gebildet ist, die jeweils in einer im Wesentlichen senkrecht zur Transportebene (56) oder -richtung orientierten Verschieberichtung von oben und unten in die Transportebene (56) zufahrbar sind.

2. Behälterbehandlungsanlage nach Anspruch 1, bei der das Schottelement (12, 14) mindestens vierteilig ist, wobei zwei Teile von unten nach oben und zwei Teile von oben nach unten in die Transportebene (56) zugestellt werden können, wobei jeweils ein von oben nach unten und ein von unten nach oben bewegbares Teil auf einer Seite einer das Schottelement (12, 14) umgebenden Trennwand des Maschinenschutzes (44) angeordnet ist.

3. Behälterbehandlungsanlage nach einem der Ansprüche 1 oder 2, bei der die Behältergreifer (54) bei in die Transportebene (56) oder -richtung bewegtem Schottelement (12, 14) jeweils im Übergabebereich (40, 42) bleiben und dort berührungslos zumindest teilweise vom Schottelement (12, 14) abgedeckt sind.

4. Behälterbehandlungsanlage nach einem der Ansprüche 1 bis 3, bei der die jeweils innerhalb des Übergabebereichs (40, 42) befindlichen Behältergreifer (54) zumindest eines von wenigstens zwei benachbarten umlaufenden Fördereinrichtungen (30) bei in die Transportebene (56) oder -richtung bewegtem Schottelement (12, 14) annähernd vollständig abgedeckt sind.

5. Behälterbehandlungsanlage nach einem der Ansprüche 1 bis 3, bei der die jeweils innerhalb des Übergabebereichs (40, 42) befindlichen Behältergreifer (54) von wenigstens zwei benachbarten umlaufenden Fördereinrichtungen (30) bei in die Transportebene (56) oder -richtung bewegtem Schottelement (12, 14) annähernd vollständig abgedeckt sind.

6. Behälterbehandlungsanlage nach einem der Ansprüche 1 bis 5, bei der ein Bereich eines Schottelements (12, 14), welcher sich im Wesentlichen parallel zu der Transportebene (56) erstreckt, eine Kontur aufweist, die im Wesentlichen einer Kontur der von diesem Schottelement (12, 14) abgedeckten Fördereinrichtung entspricht oder dieser Kontur zumindest abschnittsweise angenähert ist.

7. Behälterbehandlungsanlage nach einem der Anspruch 6, wobei die Kontur im Wesentlichen bogen- bzw. teilkreisförmig ist und sich der Bogen bzw. Teilkreis im Wesentlichen parallel zu der Transportebene (56) erstreckt und wobei die Kontur insbesondere konzentrisch zu einer Drehachse der von diesem Schottelement (12, 14) abgedeckten Fördereinrichtung ist.

8. Behälterbehandlungsanlage nach einem der Ansprüche 1 bis 7, bei der die umlaufenden Fördereinrichtungen (30) jeweils durch rotierende Förder-, Transferoder Übergabesterne (32, 34, 36, 38) mit am Außenumfang jeweils verteilten Behältergreifern (54) gebildet sind, wobei das Schottelement (12, 14) derart ausgebildet ist, dass die rotierende Förder-, Transfer- oder Übergabesterne (32, 34, 36, 38) in jeder Lage des Schottelementes (12, 14) weiterhin uneingeschränkt drehbar sind.

9. Behälterbehandlungsanlage nach einem der Ansprüche 1 bis 8, wobei das Schottelement (12, 14) derart ausgebildet ist, dass die Behältergreifer (54) jedes der wenigstens zwei umlaufenden Fördereinrichtungen (30) in jeder Lage des Schottelementes (12, 14) weiterhin uneingeschränkt beweglich sind.

10. Behälterbehandlungsanlage nach einem der Ansprüche 1 bis 9, bei der die Fördereinrichtungen (30) Drehachsen umfassen, um welche sich die Behältergreifer (54) in einem Betriebsmodus oder in einem Produktionsmodus drehen, wobei die Drehachsen der Fördereinrichtungen (30) in einem festen Abstand zu einer Trennwand des Maschinenschutzes (44) angeordnet sind und/oder bei der die Behältergreifer (54) an jeder bestimmten Umfangsposition relativ zur Drehachse immer denselben Abstand zu der Drehachse aufweisen.

11. Verfahren zum Herstellen zweier getrennter Bereiche in einer Behälterbehandlungsanlage (10) mit mindestens zwei in jeweils unterschiedlichen, aber benachbarten Anlagenbereichen (16, 18, 20) umlaufenden Fördereinrichtungen (30), die jeweils eine Vielzahl von Behältergreifern (54) aufweisen und die paarweise jeweils einen Übergabebereich (40, 42) definieren, der von beiden benachbarten Fördereinrichtungen (30) gemeinsam tangiert wird, wobei die mindestens zwei benachbarten Anlagenbereiche (16, 18, 20) jeweils durch einen Maschinenschutz (44) begrenzt und separat voneinander zugänglich sind, und wobei die mindestens zwei Anlagenbereiche (16, 18, 20) durch Aktivieren eines beweglichen Schottelementes (12, 14), welches in einen Transport- und/oder Übergabeweg von beförderten Behältern (66) zwischen die mindestens zwei Fördereinrichtungen (30) eingebracht oder von dort entfernt wird, zumindest teilweise voneinander abgetrennt werden, wobei das Schottelement (12, 14) beim Abtrennen der in den jeweiligen Anlagenbereichen (16, 18, 20) befindlichen mindestens zwei Fördereinrichtungen (30) voneinander oder beim Freigeben des Transport- und/oder Übergabeweges zwischen den Fördereinrichtungen (30) einer im Wesentlichen senkrecht zur Transportebene (56) oder Transportrichtung der Behälter (66) orientierten Bewegungsrichtung folgt, und wobei das Schottelement (12 ,14) beim Abtrennen der in den jeweiligen Anlagenbereichen (16, 18, 20) befindlichen mindestens zwei Fördereinrichtungen (30) voneinander die Behältergreifer (54) zumindest einer der beiden Fördereinrichtungen (30) im Übergabebereich (40, 42) weitgehend gegenüber demjenigen Anlagenbereich (16, 18, 20) abschirmt, in dem sich die jeweils andere Fördereinrichtung (30) befindet, , **dadurch gekennzeichnet, dass** das Schottelement (12, 14) durch wenigstens zwei separate und unabhängig voneinander in ungefähr vertikaler Richtung verschiebbare Schottwandabschnitte (46, 48) gebildet wird, die jeweils in einer im Wesentlichen senkrecht zur Transportebene (56) oder -richtung orientierten Verschieberichtung von oben und unten in die Transportebene (56) gegeneinander zugestellt oder auseinander bewegt werden.

12. Verfahren nach Anspruch 11, bei dem die jeweils innerhalb des Übergabebereichs (40, 42) befindlichen Behältergreifer (54) zumindest eines von wenigstens zwei benachbarten umlaufenden Fördereinrichtungen (30) bei in die Transportebene (56) oder -richtung bewegtem Schottelement (12, 14) annähernd vollständig abgedeckt werden.

13. Verfahren nach einem der Ansprüche 11 oder 12, bei dem die umlaufenden Fördereinrichtungen (30) jeweils durch rotierende Förder-, Transfer- oder Übergabesterne (32, 34, 36, 38) mit am Außenumfang jeweils verteilten Behältergreifern (54) gebildet sind, wobei die umlaufenden Fördereinrichtungen (30) in jeder Lage des verschiebbaren Schottelementes (12, 14) uneingeschränkt drehbeweglich sind.

14. Verfahren nach einem der Ansprüche 11 bis 13, bei dem die Behältergreifer (54) jedes der wenigstens zwei umlaufenden Fördereinrichtungen (30) in jeder Lage des verschiebbaren Schottelementes (12, 14) uneingeschränkt beweglich sind.

15. Verfahren gemäß einem der Ansprüche 11 bis 14 zum Herstellen zweier getrennter Bereiche in einer Behälterbehandlungsanlage (10), die gemäß einem der Ansprüche 1 bis 10 ausgestaltet ist.

## Claims

1. A container handling facility (10), with at least two conveying devices (30), each circulating in different but adjacent facility areas (16, 18, 20), each having a multitude of container grippers (54), and in each instance pairwise defining a transfer area (40, 42) to which both adjacent conveying devices (30) together are tangent,
wherein the at least two adjacent facility areas (16, 18, 20) are each delimited by a machine protection (44) and are accessible separately from each other,
and wherein the at least two facility areas (16, 18, 20) are at least partially separable from each other by a movable partition element (12, 14), which is insertable between the at least two conveying devices (30) into a transport path and/or transfer path of conveyed containers (66) or which is removable from there,
- wherein, upon the at least two conveying devices (30) situated in the particular facility areas (16, 18, 20) being separated from each other or upon the transport path and/or transfer path between the conveying devices (30) being cleared, the partition element (12, 14) follows a movement direction that is oriented substantially perpendicular to the transport plane (56) or transport direction of the containers (66),
- and wherein, upon the at least two conveying devices (30) situated in the particular facility areas (16, 18, 20) being separated from each other, the partition element (12, 14) largely shields the container grippers (54) of at least one of the two conveying devices (30) in the transfer area (40, 42) from the facility area (16, 18, 20) in which the particular other conveying device (30) is situated,
**characterised in that** the partition element (12, 14) is formed by at least two separate partition wall sections (46, 48) that are shiftable independently of one another in approximately vertical direction, which partition wall sections (46, 48) are each advanceable from above and below into the transport plane (56) in a shifting direction that is oriented substantially perpendicular to the transport plane (56) or transport direction.

2. The container handling facility according to claim 1, in which the partition element (12, 14) is at least four-part, wherein two parts can be advanced upward from below, and two parts can be advanced downward from above into the transport plane (56), wherein in each instance one part that is movable downward from above and one part that is movable upward from below is arranged on one side of a dividing wall of the machine protection (44) surrounding the partition element (12, 14).

3. The container handling facility according to one of the claims 1 or 2, in which, with the partition element (12, 14) having been moved into the transport plane (56) or transport direction, the container grippers (54) in each instance remain in the transfer area (40, 42) and are contact-free and at least partially covered there by the partition element (12, 14).

4. The container handling facility according to one of the claims 1 to 3, in which, with the partition element (12, 14) having been moved into the transport plane (56) or transport direction, the in each instance within the transfer area (40, 42) situated container grippers (54) of at least one of at least two adjacent circulating conveying devices (30) are approximately completely covered.

5. The container handling facility according to one of the claims 1 to 3, in which, with the partition element (12, 14) having been moved into the transport plane (56) or transport direction, the in each instance within the transfer area (40, 42) situated container grippers (54) of at least two adjacent circulating conveying devices (30) are approximately completely covered.

6. The container handling facility according to one of the claims 1 to 5, in which a partition element (12, 14) area extending substantially parallel to the transport plane (56) has a contour substantially corresponding or at least in sections approximating to a contour of the conveying device covered by this partition element (12, 14).

7. The container handling facility according to claim 6, wherein the contour is substantially curved or partially circular and the curve or partial circle extends substantially parallel to the transport plane (56), and wherein the contour is, in particular, concentric to an axis of rotation of the conveying device covered by this partition element (12, 14).

8. The container handling facility according to one of the claims 1 to 7, in which the circulating conveying devices (30) are each formed by rotating conveyor stars or transfer stars (32, 34, 36, 38) with container grippers (54) distributed in each instance at the outer circumference, wherein the partition element (12, 14) is designed such that the rotating conveyor stars or transfer stars (32, 34, 36, 38) continue to be rotatable without restriction in any position of the partition element (12, 14).

9. The container handling facility according to one of the claims 1 to 8, wherein the partition element (12, 14) is designed such that the container grippers (54) of each of the at least two circulating conveying devices (30) continue to be movable without restriction in any position of the partition element (12, 14).

10. The container handling facility according to one of the claims 1 to 9, in which the conveying devices (30) comprise axes of rotation about which the container grippers (54) rotate in an operating mode or in a production mode, wherein the axes of rotation of the conveying devices (30) are arranged at a fixed distance from a dividing wall of the machine protection (44), and/or in which the container grippers (54) always have the same distance to the axis of rotation from each specific circumferential position relative to the axis of rotation.

11. A method for producing two separate areas in a container handling facility (10), with at least two conveying devices (30), each circulating in different but adjacent facility areas (16, 18, 20), each having a multitude of container grippers (54), and in each instance pairwise defining a transfer area (40, 42) to which both adjacent conveying devices (30) together are tangent, wherein the at least two adjacent facility areas (16, 18, 20) are each delimited by a machine protection (44) and are accessible separately from each other, and wherein the at least two facility areas (16, 18, 20) are at least partially separated from each other by activation of a movable partition element (12, 14), which is inserted between the at least two conveying devices (30) into a transport path and/or transfer path of conveyed containers (66) or which is removed from there, wherein, upon the at least two conveying devices (30) situated in the particular facility areas (16, 18, 20) being separated from each other or upon the transport path and/or transfer path between the conveying devices (30) being cleared, the partition element (12, 14) follows a movement direction that is oriented substantially perpendicular to the transport plane (56) or transport direction of the containers (66),
and wherein, upon the at least two conveying devices (30) situated in the particular facility areas (16, 18, 20) being separated from each other, the partition element (12, 14) largely shields the container grippers (54) of at least one of the two conveying devices (30) in the transfer area (40, 42) from the facility area (16, 18, 20) in which the particular other conveying device (30) is situated, **characterised in that** the partition element (12, 14) is formed by at least two separate partition wall sections (46, 48) that are shiftable independently of one another in approximately vertical direction, which partition wall sections (46, 48) are in each instance advanced toward one another from above and below into the transport plane (56), or moved apart, in a shifting direction that is oriented substantially perpendicular to the transport plane (56) or transport direction.

12. The method according to claim 11, in which, with the partition element (12, 14) having been moved into the transport plane (56) or transport direction, the in each instance within the transfer area (40, 42) situated container grippers (54) of at least one of at least two adjacent circulating conveying devices (30) are approximately completely covered.

13. The method according to one of the claims 11 or 12, in which the circulating conveying devices (30) are each formed by rotating conveyor stars or transfer stars (32, 34, 36, 38) with container grippers (54) distributed in each instance at the outer circumference, wherein the circulating conveying devices (30) are rotationally movable without restriction in any position of the shiftable partition element (12, 14).

14. The method according to of one of the claims 11 to 13, in which the container grippers (54) of each of the at least two circulating conveying devices (30) are movable without restriction in any position of the shiftable partition element (12, 14).

15. The method according to of one of the claims 11 to 14 for producing two separate areas in a container handling facility (10) designed according to one of the claims 1 to 10.

## Revendications

1. Installation de traitement de récipients (10) comprenant au moins deux dispositifs de transport (30) qui circulent dans des zones d'installation (16, 18, 20) respectivement différentes mais adjacentes et qui présentent chacun une pluralité d'organes de préhension de récipient (54) et définissent par paires respectivement une zone de transfert (40, 42) qui est affectée en commun par les deux dispositifs de transport (30) adjacents,
dans laquelle lesdites au moins deux zones d'installation (16, 18, 20) adjacentes sont chacune délimitées par un protecteur de machine (44) et sont accessibles séparément l'une de l'autre,
et dans laquelle lesdites au moins deux zones d'installation (16, 18, 20) peuvent être séparées, au moins en partie, l'une de l'autre par un élément de cloison (12, 14) déplaçable qui peut être introduit dans un chemin de transport et/ou de transfert de récipients (66) transportés, entre lesdits au moins deux dispositifs de transport (30), ou en être retiré,
- dans laquelle, lorsque lesdits au moins deux dispositifs de transport (30) se trouvant dans les zones d'installation (16, 18, 20) respectives sont séparés l'un de l'autre ou lorsque le chemin de transport et/ou de transfert entre les dispositifs de transport (30) est libéré, ledit élément de cloison (12, 14) suit une direction de déplacement orientée pour l'essentiel perpendiculairement au plan de transport (56) ou à la direction de transport des récipients (66),
- et dans laquelle, lorsque lesdits au moins deux dispositifs de transport (30) se trouvant dans les zones d'installation (16, 18, 20) respectives sont séparés l'un de l'autre, ledit élément de cloison (12, 14) protège dans une large mesure les organes de préhension de récipient (54) d'au moins l'un des deux dispositifs de transport (30) dans la zone de transfert (40, 42) par rapport à la zone d'installation (16, 18, 20) dans laquelle se trouve l'autre dispositif de transport (30) respectif,
**caractérisée par le fait que** l'élément de cloison (12, 14) est formé par au moins deux sections de paroi de cloison (46, 48) séparées qui peuvent être déplacées indépendamment l'une de l'autre dans une direction à peu près verticale et qui peuvent être fermées en les déplaçant chacune d'en haut et d'en bas dans le plan de transport (56) dans une direction de déplacement orientée pour l'essentiel perpendiculairement au plan de transport (56) ou à la direction de transport.

2. Installation de traitement de récipients selon la revendication 1, dans laquelle ledit élément de cloison (12, 14) est réalisé en au moins quatre parties, dans laquelle deux parties peuvent être amenées de bas en haut et deux parties peuvent être amenées de haut en bas dans le plan de transport (56), dans laquelle respectivement une partie déplaçable de haut en bas et une partie déplaçable de bas en haut est disposée d'un côté d'une paroi de séparation du protecteur de machine (44), qui entoure ledit élément de cloison (12, 14).

3. Installation de traitement de récipients selon l'une quelconque des revendications 1 ou 2, dans laquelle lesdits organes de préhension de récipient (54) restent chacun dans la zone de transfert (40, 42) lorsque l'élément de cloison (12, 14) est déplacé dans le plan de transport (56) ou la direction de transport et y sont recouverts, au moins en partie, sans contact par l'élément de cloison (12, 14).

4. Installation de traitement de récipients selon l'une quelconque des revendications 1 à 3, dans laquelle les organes de préhension de récipient (54) se trouvant chacun à l'intérieur de la zone de transfert (40, 42), d'au moins l'un d'au moins deux dispositifs de transport (30) adjacents en circulation sont presque entièrement recouverts lorsque l'élément de cloison (12, 14) est déplacé dans le plan de transport (56) ou la direction de transport.

5. Installation de traitement de récipients selon l'une quelconque des revendications 1 à 3, dans laquelle les organes de préhension de récipient (54) se trouvant chacun à l'intérieur de la zone de transfert (40, 42) d'au moins deux dispositifs de transport (30) adjacents en circulation sont presque entièrement recouverts lorsque l'élément de cloison (12, 14) est déplacé dans le plan de transport (56) ou la direction de transport.

6. Installation de traitement de récipients selon l'une quelconque des revendications 1 à 5, dans laquelle une zone d'un élément de cloison (12, 14), qui s'étend pour l'essentiel parallèlement au plan de transport (56), présente un contour qui correspond pour l'essentiel à un contour du dispositif de transport recouvert par cet élément de cloison (12, 14) ou est approché au moins par sections de ce contour.

7. Installation de traitement de récipients selon la revendication 6, dans laquelle le contour est pour l'essentiel en forme d'arc ou bien de cercle partiel et l'arc ou bien le cercle partiel s'étend pour l'essentiel parallèlement au plan de transport (56), et dans laquelle le contour est en particulier concentrique à un axe de rotation du dispositif de transport recouvert par cet élément de cloison (12, 14).

8. Installation de traitement de récipients selon l'une quelconque des revendications 1 à 7, dans laquelle les dispositifs de transport (30) en circulation sont formés chacun par des étoiles rotatives de transport ou de transfert (32, 34, 36, 38) comprenant des organes de préhension de récipient (54) répartis chacun sur la circonférence extérieure, dans laquelle l'élément de cloison (12, 14) est conçu de manière à ce que les étoiles rotatives de transport ou de transfert (32, 34, 36, 38) puissent continuer à tourner sans restriction dans toute position de l'élément de cloison (12, 14).

9. Installation de traitement de récipients selon l'une quelconque des revendications 1 à 8, dans laquelle l'élément de cloison (12, 14) est conçu de telle manière que les organes de préhension de récipient (54) de chacun desdits au moins deux dispositifs de transport (30) en circulation continuent à être déplaçables sans restriction dans toute position de l'élément de cloison (12, 14).

10. Installation de traitement de récipients selon l'une quelconque des revendications 1 à 9, dans laquelle les dispositifs de transport (30) comprennent des axes de rotation autour desquels tournent les organes de préhension de récipient (54) dans un mode de fonctionnement ou dans un mode de production, dans laquelle les axes de rotation des dispositifs de transport (30) sont disposés à une distance fixe par rapport à une paroi de séparation du protecteur de machine (44) et/ou dans laquelle les organes de préhension de récipient (54) présentent toujours la même distance de l'axe de rotation sur n'importe quelle position circonférentielle déterminée par rapport à l'axe de rotation.

11. Procédé de réalisation de deux zones séparées dans une Installation de traitement de récipients (10) comprenant au moins deux dispositifs de transport (30) qui circulent dans des zones d'installation (16, 18, 20) respectivement différentes mais adjacentes et qui présentent chacun une pluralité d'organes de préhension de récipient (54) et définissent par paires respectivement une zone de transfert (40, 42) qui est affectée en commun par les deux dispositifs de transport (30) adjacents, dans lequel lesdites au moins deux zones d'installation (16, 18, 20) adjacentes sont chacune délimitées par un protecteur de machine (44) et sont accessibles séparément l'une de l'autre, et dans lequel lesdites au moins deux zones d'installation (16, 18, 20) sont séparées, au moins en partie, l'une de l'autre en activant un élément de cloison (12, 14) déplaçable qui est introduit dans un chemin de transport et/ou de transfert de récipients (66) transportés, entre lesdits au moins deux dispositifs de transport (30), ou en est retiré, dans lequel, lorsque lesdits au moins deux dispositifs de transport (30) se trouvant dans les zones d'installation (16, 18, 20) respectives sont séparés l'un de l'autre ou lorsque le chemin de transport et/ou de transfert entre les dispositifs de transport (30) est libéré, ledit élément de cloison (12, 14) suit une direction de déplacement orientée pour l'essentiel perpendiculairement au plan de transport (56) ou à la direction de transport des récipients (66),
et dans lequel, lorsque lesdits au moins deux dispositifs de transport (30) se trouvant dans les zones d'installation (16, 18, 20) respectives sont séparés l'un de l'autre, ledit élément de cloison (12, 14) protège dans une large mesure les organes de préhension de récipient (54) d'au moins l'un des deux dispositifs de transport (30) dans la zone de transfert (40, 42) par rapport à la zone d'installation (16, 18, 20) dans laquelle se trouve l'autre dispositif de transport (30) respectif,
**caractérisé par le fait que** l'élément de cloison (12, 14) est formé par au moins deux sections de paroi de cloison (46, 48) séparées qui peuvent être déplacées indépendamment l'une de l'autre dans une direction à peu près verticale et qui sont chacune rapprochées ou éloignées l'une de l'autre d'en haut et d'en bas dans le plan de transport (56) dans une direction de déplacement orientée pour l'essentiel perpendiculairement au plan de transport (56) ou à la direction de transport.

12. Procédé selon la revendication 11, dans laquelle les organes de préhension de récipient (54) se trouvant chacun à l'intérieur de la zone de transfert (40, 42), d'au moins l'un d'au moins deux dispositifs de transport (30) adjacents en circulation sont presque entièrement recouverts lorsque l'élément de cloison (12, 14) est déplacé dans le plan de transport (56) ou la direction de transport.

13. Procédé selon l'une quelconque des revendications 11 ou 12, dans lequel les dispositifs de transport (30) en circulation sont formés chacun par des étoiles rotatives de transport ou de transfert (32, 34, 36, 38) comprenant des organes de préhension de récipient (54) répartis chacun sur la circonférence extérieure, dans laquelle les dispositifs de transport (30) en circulation sont déplaçables en rotation sans restriction dans toute position de l'élément de cloison (12, 14) déplaçable.

14. Procédé selon l'une quelconque des revendications 11 à 13, dans lequel les organes de préhension de récipient (54) de chacun desdits au moins deux dispositifs de transport (30) en circulation sont déplaçables sans restriction dans toute position de l'élément de cloison (12, 14) déplaçable.

15. Procédé selon l'une quelconque des revendications 11 à 14, destiné à réaliser deux zones séparées dans une installation de traitement de récipients (10) qui est conçue selon l'une quelconque des revendications 1 à 10.
